# NEUE EUROPÄISCHE PATENTSCHRIFT

(11) **EP 2 407 231 B2**
(45) Veröffentlichungstag und Bekanntmachung des Hinweises auf die Entscheidung über den Einspruch: **25.06.2025**
(45) Hinweis auf die Patenterteilung: 01.11.2017
(21) Anmeldenummer: 11171179.2
(22) Anmeldetag: 23.06.2011
(51) Int. Cl.: B01D 53/26, B60T 17/00

(54) **Nutzfahrzeug-Druckluftaufbereitungseinrichtung**
Pressurised air processing device for a commercial vehicle
Dispositif de traitement d'air comprimé de véhicule utilitaire

(30) Priorität: 14.07.2010 DE 102010031306
(43) Veröffentlichungstag der Anmeldung: 18.01.2012
(73) Patentinhaber: Haldex Aktiebolag, 261 24 Landskrona (SE)
(72) Erfinder: Heer, Siegfried, 69168 Wiesloch (DE)
(74) Vertreter: Müller Schupfner & Partner Patent- und Rechtsanwaltspartnerschaft mbB (Muc)

(56) Entgegenhaltungen:
- EP-A2- 1 980 312
- WO-A2-2011/134575
- DE-A1- 3 244 414
- DE-A1- 3 525 083
- DE-A1- 3 533 893
- DE-B3- 10 338 162
- GB-A- 352 972
- US-A- 2 440 326
- US-A- 4 197 095
- US-A- 4 605 425
- US-A- 4 718 020
- US-A- 4 812 148

## Beschreibung

### TECHNISCHES GEBIET DER ERFINDUNG

Die Erfindung betrifft eine Nutzfahrzeug-Druckluftaufbereitungseinrichtung mit einem Kompressor und zwei Lufttrocknungskartuschen. Bei der Nutzfahrzeug-Druckluftaufbereitungseinrichtung ist für einen Versorgungs- oder Lastbetrieb der Kompressor über eine Lufttrocknungskartusche mit der Druckluftanlage verbindbar, während für einen Regenerationsbetrieb eine Druckluftquelle der Druckluftanlage über eine Lufttrocknungskartusche mit einem Entlüftungsanschluss verbindbar ist.

### STAND DER TECHNIK

In bekannten Nutzfahrzeug-Druckluftaufbereitungseinrichtungen finden Lufttrocknungskartuschen Einsatz, über welche einer von einem Kompressor geförderten Druckluft darin enthaltene Feuchtigkeit entzogen wird. Da in bekannten Lufttrocknungskartuschen eingesetzte Trocknungsmittel lediglich eine begrenzte Aufnahmekapazität für Feuchtigkeit (und anderweitige Partikel wie Öltropfen und Verschmutzungen) besitzen, muss nach einer gewissen Betriebsdauer in dem Versorgungs- oder Lastbetrieb ein Regenerationsbetrieb erfolgen, in welchem der Lufttrockner mit getrockneter Luft durchströmt wird, um in dem Trocknungsmittel aufgenommene Feuchtigkeit und anderweitige Verunreinigungen abzuführen. Üblicherweise wird in einem derartigen Regenerationsbetrieb die Lufttrocknungskartusche in umgekehrter Richtung zu dem Versorgungsbetrieb durchströmt. Somit wird die Lufttrocknungskartusche eingangsseitig im Versorgungsbetrieb mit dem Kompressor verbunden und im Regenerationsbetrieb mit einem Entlüftungsanschluss verbunden. Der intermittierende Versorgungs- und Regenerationsbetrieb hat allerdings zur Folge, dass die Bereitstellung von Druckluft nicht ständig möglich ist, sondern während des Regenerationsbetriebs unterbrochen werden muss.

Zur Vermeidung derartiger Unterbrechungen sind Nutzfahrzeug-Druckluftaufbereitungseinrichtungen mit zwei (oder mehr) Lufttrocknungskartuschen bekannt, die wechselweise im Versorgungs- und Regenerationsbetrieb betrieben werden können, so dass eine ständige Druckluftversorgung von dem Kompressor durch die jeweils im Versorgungsbetrieb betriebene Lufttrocknungskartusche gewährleistet ist. Hierbei wird der getrocknete ausgangsseitige Druckluftstrom der Lufttrocknungskartusche, die im Versorgungsbetrieb betrieben wird, aufgeteilt in einen Teilluftstrom, welcher dann der stromabwärtigen Druckluftanlage zugeführt wird, sowie einen Teilluftstrom, der als Regenerationsluftstrom genutzt wird und zur Gewährleistung des Regenerationsbetriebs in umgekehrter Richtung die andere, im Regenerationsbetrieb betriebene Lufttrocknungskartusche durchströmt. Letztendlich steht somit während der gesamten Betriebsphase des Kompressors in der Druckluftanlage lediglich ein Teilluftstrom des vom Kompressor geförderten Druckluftstroms zur Verfügung. Nutzfahrzeug-Druckluftaufbereitungseinrichtungen mit zwei Lufttrocknungskartuschen werden auch als so genannte "Twin Tower" bezeichnet. Durch den Einsatz eines Twin Towers kann unter Umständen die Notwendigkeit entfallen, dass der Kompressor aktiviert und deaktiviert wird, was die Steuerung desselben vereinfachen kann und/oder die Lebensdauer desselben erhöhen kann.

Gemäß US 5,685,896 wird für einen Twin Tower eine Ventileinheit vorgeschlagen, welche zwei Ventilgruppen beinhaltet, die jeweils einer Lufttrocknungskartusche zugeordnet sind und pneumatisch alternierend und wechselweise in eine Versorgungsstellung sowie eine Regenerationsstellung verbracht werden. Mittels eines pneumatischen Steuerdrucks erfolgt nach einer vorbestimmten Zeitspanne die Umschaltung. Ausgangsseitig sind die Lufttrocknerkartuschen über eine Art Wechselventil mit der Druckluftanlage verbunden, wobei das Ventilelement eine Drosselbohrung besitzt, über welche ein getrockneter Teilluftstrom zu der im Regenerationsbetrieb betriebenen Lufttrocknungskartusche zurückgeführt wird.

EP 0 933 117 A1 offenbart ein weiteres Wechselventil, in welchem eine Aufteilung des vom Kompressor geförderten Luftstroms in einen Teilluftstrom erfolgt, welcher der Druckluftanlage zugeführt wird, sowie einen Teilluftstrom, welcher zur Regeneration der nicht zur Trocknung genutzten Lufttrocknungskartusche genutzt wird. Entsprechende Wechselventile sind auch den Druckschriften US 5,901,459, US5,901,464, US 5,983,516 zu entnehmen.

US 5,961,698 erwähnt zunächst die Möglichkeit der Beseitigung abgeschiedener Fremdkörper, Partikel und Fluide in einem Twin Tower. Hierzu finden im Regenerationsbetrieb ein Zyklon sowie zusätzliche Filterelemente Einsatz. Der wechselseitige Betrieb der beiden Lufttrocknungskartuschen wird elektromagnetisch gesteuert durch ein Magnetventil, wobei das Umschalten durch einen Timer ausgelöst wird.

DE 35 25 083 A1 offenbart die Speisung einer mit einem Vierkreisschutzventil verbundenen Zentralleitung mit einem darin angeordneten Rückschlagventil von einem Kompressor über einen Druckregler und ein Wechselventil, von welchem zwei Leitungszweige ausgehen, die vor dem der Zentralleitung zugeordneten Rückschlagventil wieder zusammengeführt werden. In beiden Leitungszweigen ist jeweils eine Lufttrocknungskartusche angeordnet. Mittels eines 4/2-Wege-Magnetventils kann ein Hin- und Herschalten zwischen zwei Betriebsweisen erfolgen, wobei in den unterschiedlichen Betriebsweisen jeweils ein Leitungszweig für einen Versorgungsbetrieb genutzt wird, während der andere Leitungszweig für einen Regenerationsbetrieb genutzt wird. Hierzu verfügen die Leitungszweige jeweils über in Versorgungsrichtung öffnende Rückschlagventile, welche den Lufttrocknungskartuschen nachgeordnet sind, jeweils mit einer das Rückschlagventil umgehenden Bypassleitung, in welcher eine Drossel angeordnet ist. Darüber hinaus ist den Lufttrocknungskartuschen jeweils ein von dem 4/2-Wege-Magnetventil wechselseitig angesteuertes Entlüftungsventil vorgeordnet. Infolge der pneumatischen Ansteuerung durch das elektrisch angesteuerte 4/2-Wege-Magnetventil ist das Entlüftungsventil in dem Leitungszweig, in welchem die Versorgung erfolgt, abgesperrt, so dass Druckluft von dem Kompressor über den Druckregler und das Wechselventil über die Lufttrocknungskartusche dieses Leitungszweigs und das Rückschlagventil zu der Zentralleitung gelangt. Hingegen ist gleichzeitig zwingend in dem anderen Leitungszweig zwecks Regeneration über das 4/2-Wege-Magnetventil das Entlüftungsventil geöffnet, so dass ein Teilluftstrom aus dem anderen Leitungszweig, welcher sich im Versorgungsbetrieb befindet, über die Bypassleitung und die Drossel die Lufttrocknungskartusche in dem Leitungszweig, in welchem die Regeneration stattfindet, rückwärts durchströmen kann mit Austritt der feuchten Druckluft über das Entlüftungsventil in die Umgebung. Alternative in dieser Druckschrift offenbarte Ausführungsformen widmen sich dem Umsteuervorgang für die Nutzung eines Leitungszweigs für den Versorgungsbetrieb zur Nutzung in dem Regenerationsbetrieb und umgekehrt. Vorgeschlagen wird hierbei, parallel zu dem eingangsseitig der Leitungszweige angeordneten Wechselventil ein Zweidruckventil anzuordnen, dessen Ausgang mit dem 4/2-Wege-Magnetventil verbunden ist. Andererseits schlägt die Druckschrift vor, anstelle des 4/2-Wege-Magnetventils zwei 3/2-Wege-Magnetventile einzusetzen, welche ebenfalls zur wechselweisen alternierenden Durchführung des Versorgungsbetriebs und des Regenerationsbetriebs in den beiden Leitungszweigen angesteuert werden.

Auch DE 32 44 414 A1 offenbart die wechselseitige Nutzung von zwei Leitungszweigen mit Lufttrocknungskartuschen für einen Versorgungsbetrieb und einen Regenerationsbetrieb, wobei hier eingangsseitig der beiden Leitungszweige ein 4/2-Wege-Magnetventil angeordnet ist, welches in einer Schaltstellung jeweils einen Leitungszweig mit dem Kompressor und den anderen Leitungszweig mit einer Entlüftung verbindet. Als Regenerationsluftstrom wird aus der Zentralleitung stromaufwärts eines Rückschlagventils ein Teilluftstrom abgeführt, welcher nach dem Passieren eines Drosselventils den Lufttrockner in dem Leitungszweig, in welchem die Regeneration erfolgt, in umgekehrter Richtung durchströmt. Um das Verhältnis des Druckluftstroms in dem Leitungszweig mit dem Versorgungsbetrieb zu dem Druckluftstrom in dem Leitungszweig mit dem Regenerationsbetrieb unabhängig von der Förderleistung des Kompressors konstant zu halten, schlägt die Druckschrift vor, das Drosselventil mit stufenlos veränderbarer Drossel zu gestalten, wobei die Veränderung der Drosselcharakteristik pneumatisch gesteuert wird. Als Steuerdruck dient hierbei der seitens des Kompressors bereitgestellte Förderdruck.

Die nicht gattungsgemäße Druckschrift GB 352 972 A offenbart ein Druckluftsystem für Lokomotiven und andere Fahrzeuge, in dem zwei Adsorber oder Behälter in parallelen Leitungszweigen durchströmt werden. Von einer Heizeinrichtung der Umgebung entnommene und erwärmte Luft kann hierbei genutzt werden, um das Material in dem Adsorber zu trocknen und zu reaktivieren. Die Steuerung der Luftströme durch die Adsorber erfolgt über manuelle betätigte Ventile, die stromaufwärts und stromabwärts der Adsorber angeordnet sind.

Auch die Druckschriften US 4, 812,148 A und US 2,440,326 A betreffen Druckluftsysteme für eine Eisenbahn.

Der nächstliegende Stand der Technik EP 1 980 312 A2 offenbart eine Adsorptions-Trocknungseinheit, die zwischen eine Pumpe und eine über eine zentrale Ausgangsleitung versorgte technische Anlage zwischengeschaltet ist. In der Adsorptions-Trocknungseinheit verzweigt eine Eingangsleitung in zwei parallele Leitungszweige, in denen jeweils ein Magnetventil und ein Behälter mit einem hygroskopischen Material angeordnet ist. Die beiden Leitungszweige werden über ein Wechselventil wieder zusammengeführt, womit die zentrale Ausgangsleitung der Absorptions-Trocknungseinheit über den Leitungszweig mit Druckluft versorgt werden kann, an dem ein größerer Druck ansteht. Dem Wechselventil ist eine unter Umständen schaltbare Drossel parallel geschaltet. Die Behälter mit dem hygroskopischen Material sind über Magnetventile mit der Umgebung verbunden.

Nicht gattungsgemäße stationäre Fraktioniereinrichtungen für Gasgemische sind aus den Druckschriften US 4,197,095 A, US 4,605,425 A und US 4,718,020 A bekannt. Die Druckschrift DE 103 38 162 B3 offenbart eine Nutzfahrzeug-Druckluftaufbereitungseinrichtung mit einer einzigen Lufttrocknungskartusche. Weiterer Stand der Technik ist aus DE 35 25 083 A1,

### AUFGABE DER ERFINDUNG

Der Erfindung liegt die Aufgabe zugrunde, eine Nutzfahrzeug-Druckluftaufbereitungseinrichtung mit verbesserten Möglichkeiten der Steuerung oder Ausnutzung der Druckluftströme in einem Lastbetrieb und/oder Regenerationsbetrieb vorzuschlagen.

### LÖSUNG

Die Aufgabe der Erfindung wird erfindungsgemäß mit den Merkmalen des unabhängigen Patentanspruchs 1 und/oder 2 gelöst. Weitere Ausgestaltungen der Erfindung ergeben sich entsprechend den abhängigen Patentansprüchen.

### BESCHREIBUNG DER ERFINDUNG

Die vorliegende Erfindung löst sich von dem Vorurteil des Fachmanns, dass hingenommen werden muss, dass für eine Regeneration des Trocknungsmittels zwingend der Lastbetrieb unterbrochen werden muss, was für Nutzfahrzeug-Druckluftaufbereitungseinrichtungen mit einer einzigen Lufttrocknungskartusche der Fall ist und aufwendige Maßnahmen zur Optimierung und Minimierung der Regenerationsphasen nach sich zieht. Andererseits folgt die Erfindung nicht dem Vorurteil, dass mit der Beseitigung der zwingenden Unterbrechung der Lastphasen durch Einsatz von zwei Lufttrocknungskartuschen in einem Twin Tower optimale pneumatische Druckluftströme für die den Lufttrocknungskartuschen nachgeschaltete Druckluftanlage bereitgestellt werden, indem die Lufttrocknungskartuschen wechselseitig im Versorgungsbetrieb und im Regenerationsbetrieb durchströmt werden.

Erfindungsgemäß wird stattdessen vorgeschlagen, dass in einer Druckluftaufbereitungsanlage mit zwei Lufttrocknungskartuschen ein Regenerationsbetrieb einer Lufttrocknungskartusche unabhängig von einem Versorgungsbetrieb der anderen Lufttrocknungskartusche steuerbar ist. Hierzu können die pneumatischen Verbindungen von dem Kompressor über die im Versorgungsbetrieb betriebene Lufttrocknungskartusche zu der Druckluftanlage und/oder von einer Druckluftquelle der Druckluftanlage über die andere im Regenerationsbetrieb betriebene Lufttrocknungskartusche zu dem Entlüftungsanschluss jeweils unabhängig voneinander steuerbar sein. Im Rahmen der Erfindung wird unter dem Begriff Steuerung auch eine Regelung verstanden. Weiterhin umfasst die Erfindung mit der "Steuerung einer pneumatischen Verbindung" sowohl die digitale Veränderung der pneumatischen Verbindung von einer gesperrten Stellung zu einer Durchlassstellung und umgekehrt als auch jedwede anderweitige Veränderung der pneumatischen Verbindung, insbesondere eine Veränderung der Durchflussrate.

Durch die erfindungsgemäße unabhängige Steuerung sind vielfältige Beeinflussungsmöglichkeiten für die Druckluftströme in der Nutzfahrzeug-Druckluftaufbereitungseinrichtung geschaffen, von welchen im Folgenden lediglich beispielhaft einige erwähnt werden:
- Ist in einem Lastbetrieb eine erste Lufttrocknungskartusche zwischen Kompressor und Druckluftanlage zwischengeschaltet, kann für die andere zweite Lufttrocknungskartusche der Regenerationsbetrieb unabhängig gesteuert werden. Beispielsweise kann die Regenerationsphase für die zweite Lufttrocknungskartusche lediglich für eine Teilzeit oder einen Bruchteil des Lastbetriebs der ersten Lufttrocknungskartusche erfolgen, während außerhalb dieser Teilzeit kein Regenerationsluftstrom durch die zweite Lufttrocknungskartusche geleitet wird. Dies hat zur Folge, dass außerhalb des Regenerationsbetriebs für die zweite Kartusche der gesamte Druckluftstrom des Kompressors durch die erste Lufttrocknungskartusche der Druckluftanlage zugeführt wird.
- Möglich ist, dass mindestens eine pneumatische Verbindung von oder zu den Lufttrocknungskartuschen abhängig von Betriebsbedingungen gesteuert wird. Ist beispielsweise ein hoher Druckluftbedarf angesichts der Betriebsbedingungen indiziert, beispielsweise bei erhöhtem Bremsbedarf bei Bergabfahrt, kann der Regenerationsbetrieb durch die zweite Kartusche unterbrochen werden.
- Möglich ist, dass der Regenerationsbetrieb hinsichtlich des Regenerationsluftstroms und/oder der Dauer des Regenerationsbetriebs angepasst wird auf einen approximierten oder gemessenen Regenerationsbedarf. Möglich ist hier eine Anpassung an die Druckverhältnisse, die kumulierte Lastbetriebszeit der Lufttrocknungskartusche seit der letzten Regeneration, die Gesamtbetriebsdauer der Lufttrocknungskartusche, Umgebungsbedingungen wie eine Temperatur oder die Feuchte der aus der Atmosphäre entnommenen Luft je nach Jahreszeit, Temperatur und Wetterbedingungen. Möglich ist, dass die Feuchte des Trocknungsmittels unmittelbar oder mittelbar erfasst wird und eine Einleitung oder Beendigung eines Regenerationsbetriebs mit einem Über- oder Unterschreitens eines Schwellwerts für die Feuchtigkeit erfolgt. Mittelbar erfasst werden kann die Feuchte des Trocknungsmittels der Lufttrocknungskartusche beispielsweise durch Messung der Feuchte der Druckluft stromabwärts sowie stromaufwärts der Lufttrocknungskartusche, wobei durch Vergleich der erfassten Feuchten das Trocknungsverhalten der Lufttrocknungskartusche ermittelt werden kann mit einem mittelbaren Rückschluss auf die Feuchte in dem Trocknungsmittel. Ebenfalls möglich ist, dass in der Lufttrocknungskartusche oder in dem Trocknungsmittel selbst ein Feuchtesensor angeordnet ist, welcher unmittelbar die Feuchte in dem Trocknungsmittel erfasst.
- In einem Extremfall ist es ebenfalls möglich, dass für einen außergewöhnlich hohen Druckluftbedarf in Lastbetriebsphasen keine Lufttrocknungskartusche regeneriert wird, sondern vielmehr beide Lufttrocknerkartuschen von dem Kompressor, ggf. bei einer höheren Drehzahl desselben, mit Druckluft versorgt werden.

Hinweise, wie ein Zeitpunkt zur Einleitung und/oder Beendigung eines Regenerationsbetriebs in einer Lufttrocknungskartusche ermittelt werden kann, sowie die erforderliche Zeitdauer für eine Regeneration oder ein Regenerationsluftstrom ermittelt werden kann, kann der Fachmann beispielsweise EP 0 808 756 B2 entnehmen. Diese Maßnahmen können bei der Steuerung der anspruchsgemäßen Verbindungen der Lufttrocknungskartuschen berücksichtigt werden. Ein weiteres Verfahren zur Ermittlung einer geeigneten Regenerationszeitdauer ist in EP 1 390 244 B1 offenbart. Weitere Maßnahmen für die Ermittlung eines durch eine Lufttrocknerkartusche durchgeleiteten Druckluftvolumens, des Zeitpunkts des Regenerierens, des erforderlichen Luftvolumens zum Regenerieren sowie eines Zeitpunkts zum Beenden des Regenerierens sind insbesondere aus den Druckschriften EP 0 093 253 B2 und WO-A-91/16224 bekannt. Wie beispielsweise aus DE 10 2004 059 508 C5 ersichtlich ist, kann mittels der Lufttrocknungskartusche nicht lediglich der Druckluft Feuchtigkeit entzogen werden. Vielmehr können Fremdpartikel, Fluide, Öl des Kompressors, Verkokungsrückstände, Verschleißpartikel und dergleichen durch das Lufttrocknungsmittel und ergänzende Filtermaßnahmen wie Koaleszenzfilter, Aufteilung der Teilvolumenströme in einer Lufttrocknungskartusche, das Vorsehen von Sammelräumen für abgeschiedene Partikel u. ä. abgesondert werden und mit einer Regeneration aus der Kartusche beseitigt werden, ohne dass hierdurch der Rahmen der Erfindung verlassen wird. Auch möglich ist, dass das Lufttrocknungsmittel selber mit mehreren Kammern und unterschiedlichen Materialien gebildet ist. Weitere Hinweise für die Ausgestaltung unterschiedlicher Filtermedien sowie die möglichen unterschiedlichen Regenerationsluftströme in der Lufttrocknungskartusche kann der Fachmann beispielsweise EP 1 635 930 B1 entnehmen. Möglichkeiten der Beeinflussung der Kompressorleistung je nach Verbindung des Kompressors mit den Lufttrocknungskartuschen kann der Fachmann beispielsweise DE 10 2008 006 860 A1 entnehmen. Sämtliche zuvor erläuterten Maßnahmen, die für den Stand der Technik für Nutzfahrzeug-Druckluftaufbereitungseinrichtungen mit lediglich einer Lufttrocknungskartusche zur Anwendung kommen, können in die erfindungsgemäße Nutzfahrzeug-Druckluftaufbereitungseinrichtung integriert werden, ohne dass hierdurch der Rahmen der Erfindung verlassen wird.

Erfindungsgemäß können die pneumatischen Verbindungen der Lufttrocknungskartuschen mit dem Kompressor und/oder mit dem Entlüftungsanschluss jeweils bedarfsabhängig gesteuert werden, was insbesondere mit dem Ziel erfolgen kann, dass der Regenerationsbetrieb möglichst kurz gehalten wird, eine hinreichende Regeneration ermöglicht und/oder eine Regeneration in Betriebsphasen erfolgt, in denen diese nicht stört, also insbesondere kein erhöhter Druckluftbedarf besteht u. ä.

Die erfindungsgemäße Nutzfahrzeug-Druckluftaufbereitungseinrichtung besitzt eine elektronische Steuereinheit. Die elektronische Steuereinheit ist mit einer Steuerlogik ausgestattet. Mittels dieser kann ein Regenerationsbetrieb einer Lufttrocknungskartusche unabhängig von dem Versorgungsbetrieb der anderen Lufttrocknungskartusche beendet oder begonnen werden. Alternativ oder zusätzlich möglich ist, dass über die Steuerlogik und die elektronische Steuereinheit mit geeigneter Ansteuerung von Magnetventilen der Kompressor. sowohl mit einer als auch mit beiden Lufttrocknungskartuschen verbindbar ist.

Möglich ist, dass in der Steuereinheit mittels einer entsprechenden Steuerlogik eine erforderliche Regenerationsluftmenge, ein Regenerationsluftvolumenstrom oder eine Regenerationszeit für die jeweils zu regenerierende Lufttrocknungskartusche ermittelt oder approximiert wird. Für beide Lufttrocknungskartuschen können während der wechselseitigen Regenerationen gleiche oder jeweils adaptierte unterschiedliche Regenerationsluftmengen oder Regenerationszeiten zum Einsatz kommen. Nach der Ermittlung der erforderlichen Regenerationsluftmenge oder Regenerationszeit wird der Regenerationsbetrieb der Lufttrocknungskartusche, für die die Regenerationsluftmenge oder Regenerationszeit ermittelt worden ist, beendet, wenn die ermittelte erforderliche Regenerationsluftmenge die Lufttrocknungskartusche durchströmt hat oder die ermittelte erforderliche Regenerationszeit beendet ist. Geeignete Verfahren zur Ermittlung oder Approximierung der Regenerationsluftmenge, Regenerationszeit sowie der die Lufttrocknungskartusche durchströmenden Luftmenge zur Regeneration können beispielsweise den eingangs genannten Druckschriften EP 0 808 756 B2, EP 1 390 244 B1, EP 0 093 253 B2 und WO-A-91/16224 entnommen werden.

Grundsätzlich ist für die erfindungsgemäße Steuerung der pneumatischen Verbindung die Verwendung beliebiger Ventileinheiten möglich. In weiterer Ausgestaltung der Erfindung ist den Lufttrocknungskartuschen mindestens ein Ventil vorgeordnet, über welches selektiv eine Lufttrocknungskartusche oder die andere Lufttrocknungskartusche mit dem Kompressor und/oder mit dem Entlüftungsanschluss verbindbar ist. Lediglich einige Beispiele für ein derartiges Ventil oder derartige Ventile aus der Vielzahl von bestehenden Möglichkeiten sind im Rahmen der vorliegenden Figurenbeschreibung explizit angesprochen - hier kann beispielsweise ein 5/2-Wegeventil den beiden Lufttrocknungskartuschen vorgeordnet sein mit jeweils einem Ausgang zu den Lufttrocknungskartuschen, einem Eingang, welcher mit dem Kompressor verbunden ist, sowie zwei Entlüftungsanschlüssen. In der ersten Schaltstellung verbindet das 5/2-Wegeventil die erste Lufttrocknungskartusche mit dem Kompressor, während die zweite Lufttrocknungskartusche zur Ermöglichung eines Regenerationsbetriebs mit dem Entlüftungsanschluss verbunden ist. Hingegen ist in der anderen Schaltstellung die erste Lufttrocknungskartusche mit dem Entlüftungsanschluss verbunden, während die zweite Lufttrocknungskartusche mit dem Kompressor verbunden ist. Alternativ ist beispielhaft der Einsatz von zwei 3/2-Wegeventilen offenbart, die jeweils einen mit der zugeordneten Lufttrocknungskartusche verbundenen Anschluss, einen Entlüftungsanschluss sowie einen mit dem Kompressor verbundenen Anschluss besitzen. In der ersten Schaltstellung verbindet das 3/2-Wegeventil die zugeordnete Lufttrocknungskartusche mit dem Kompressor, während in der zweiten Schaltstellung über das 3/2-Wegeventil eine Verbindung des Eingangs der Lufttrocknungskartusche mit dem Entlüftungsanschluss geschaffen ist.

In einer Variante der Erfindung ermöglicht das mindestens eine Ventil (oder ein weiteres Ventil), dass beide Lufttrocknungskartuschen gleichzeitig mit dem Kompressor verbunden sind. Dies ermöglicht einen Betrieb mit der Bereitstellung eines großen getrockneten Druckluftstroms für die Druckluftanlage, bspw. bei Einsatz eines vorgeschalteten Turboladers und Betriebs desselben und des Kompressors mit einer hohen Drehzahl mit resultierendem großem Luftstrom, der eine einzelne Kartusche überlasten würde. Entsprechend kann über eines der genannten Ventile auch die gleichzeitige Verbindung der Lufttrocknungskartuschen mit dem Entlüftungsanschluss erfolgen, was insbesondere von Vorteil ist, wenn gerade kein Luftbedarf in der Druckluftanlage besteht und aus einem Druckluftvorrat getrocknete Druckluft verwendet wird, um gleichzeitig beide Lufttrocknungskartuschen zu regenerieren.

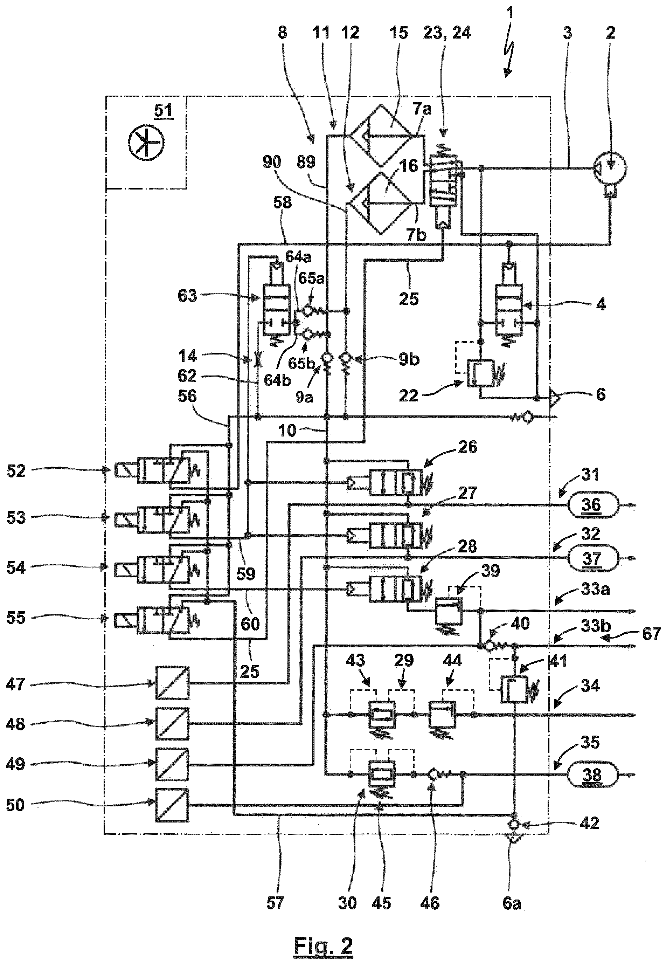

Möglich ist, dass die genannten Ventile direkt von einer elektronischen Steuereinheit elektrisch steuerbar sind, so dass diese unmittelbar als Magnetventile ausgebildet sein können. In weiterer Ausgestaltung der Erfindung ist ein Ventil oder sind die genannten Ventile über mindestens ein Magnetventil vorgesteuert. Hierbei kann das Magnetventil ausschließlich für die Ansteuerung der genannten Ventile und Funktionen zuständig sein. Ebenfalls möglich ist, dass das Magnetventil multifunktional ausgebildet ist, indem dieses beispielsweise sowohl den Steuerdruck für die genannten Ventile bereitstellt als auch weiteren Steuerfunktionen dient. Lediglich beispielhaft ist in der Figurenbeschreibung die Offenbarung eines 3/2-Wegeventils in Bauweise als Magnetventil dargestellt zur Bereitstellung eines Steuerdrucks, welcher zur Umschaltung des 5/2-Wegeventils dient. Alternativ ist beispielhaft in Fig. 2 der Einsatz von zwei Magnetventilen in Form von 3/2-Wegeventilen offenbart, mittels welchen jeweils die Steuerdrücke für pneumatisch gesteuerte 3/2-Wegeventile bereitgestellt werden, die jeweils den Lufttrocknerkartuschen vorgeordnet sind.

Erfindungsgemäß erfolgt zunächst die Speisung der Druckluftanlage über eine Zentralleitung, von welcher beispielsweise mehrere Verbraucher abzweigen können, insbesondere Betriebsbremskreise, Nebenverbraucherkreise, ein Anhängerbremskreis sowie ein Luftfederungskreis eines Nutzfahrzeugs. Der Druck ist in der Zentralleitung (und der nachgeordneten Druckluftanlage) gesichert durch mindestens ein Rückschlagventil, wobei auch zwei Rückschlagventile jeweils den Lufttrocknungskartuschen nachgeordnet sein können, welche während des Versorgungsbetriebs der zugeordneten Lufttrocknungskartusche eine Öffnungsstellung einnehmen. Allerdings kann für eine Ausführungsform der Erfindung gezielt eine Rückführung getrockneter Druckluft unter Umgehung des mindestens einen Rückschlagventils in der Zentralleitung über ein Regenerationsventil erfolgen. Grundsätzlich möglich ist, dass über das Regenerationsventil gezielt die Druckluft der Lufttrocknungskartusche zugeführt wird, welche regeneriert werden soll.

Für eine besondere erfindungsgemäße Ausgestaltung kann aber das Regenerationsventil verhältnismäßig einfach ausgebildet werden, wenn das Regenerationsventil mit den Ausgangsleitungen der Lufttrocknungskartuschen jeweils über Rückschlagventile verbunden ist, die für eine Luftströmung in Regenerationsrichtung öffnen, aber in entgegengesetzte Richtung absperren. Ein derartiges Paar von Rückschlagventilen vermeidet somit den Austritt aus der Ausgangsleitung der Lufttrocknungskartusche, welche im Lastbetrieb betrieben wird, während das andere Rückschlagventil die Rückführung getrockneter Regenerationsluft zu der Lufttrocknungskartusche ermöglicht, die regeneriert werden soll.

Möglich ist, dass ein Regenerationsventil unmittelbar von einer Steuereinheit elektrisch angesteuert wird. In vorteilhafter Ausgestaltung der Erfindung wird allerdings das Regenerationsventil über ein Magnetventil pneumatisch vorgesteuert.

Möglich ist, dass das genannte Magnetventil zur Vorsteuerung des Regenerationsventils ausschließlich für dieses zuständig ist. In besonderer Ausgestaltung der Erfindung dient allerdings dieses Magnetventil auch zur Vorsteuerung mindestens eines steuerbaren Kreisschutzventils, also eines Ventils, welches zuständig ist für die Steuerung der Befüllung, Gewährleistung der Mindestdrücke und/oder die Gewährleistung der Füllreihenfolge unterschiedlicher Verbraucherkreise der Druckluftanlage. Somit kann das Magnetventil multifunktional genutzt werden.

Eine Beeinflussung des Regenerationsvolumens, welches eine Art Verlustvolumen darstellt, welches nicht der Druckluftanlage zugeführt wird, kann über die Öffnungsdauer des Regenerationsventils erfolgen. Alternativ oder kumulativ kann die Regenerationsluftmenge beeinflusst werden über eine Drossel, welche in das Regenerationsventil selbst integriert sein kann oder in eine mit dem Regenerationsventil verbundene Leitung, nämlich eine eingangsseitige Leitung des Regenerationsventils oder eine ausgangsseitige Leitung des Regenerationsventils. Durchaus möglich ist, dass das Regenerationsventil mehrere Stellungen besitzt mit unterschiedlichen Drosselquerschnitten zwischen einer maximalen Durchlassstellung und einer Sperrstellung. Ebenfalls denkbar ist, dass das Regenerationsventil über keine Sperrstellung verfügt, sondern lediglich eine minimierte Durchlassstellung aufweist.

Weiterhin kann es von Interesse sein, dass eine Druckregelung über ein Druckregelventil und/oder eine Kompressorregelung erfolgt, wodurch letztendlich auch der den Lufttrocknungskartuschen zugeführte Volumenstrom an Druckluft beeinflusst wird. Eine weitere Ausgestaltungsform der Erfindung schlägt vor, dass ein Magnetventil vorgesehen ist, welches einen Steuerdruck bereitstellt. Der Steuerdruck kann dann zur Veränderung der Betriebsstellung eines Druckregelventils genutzt werden. Alternativ kann der Steuerdruck zur Kompressorregelung, beispielsweise zur Regelung der Drehzahl des Kompressors oder eines CVT-Getriebes für den Antrieb des Kompressors, wie dies in DE 10 2008 006 860 A1 beschrieben ist, eingesetzt werden. Durchaus möglich ist auch, dass der von dem Magnetventil erzeugte Steuerdruck sowohl für die Ansteuerung des Druckreglers als auch für die Regelung des Kompressors Einsatz findet.

Eine besondere Betriebsweise der erfindungsgemäßen Nutzfahrzeug-Druckluftaufbereitungseinrichtung wird ermöglicht, wenn in dieser ein Ventil vorgesehen ist, welches einen Druckregler in seine Entlüftungsstellung überführt, wenn beide Lufttrocknungskartuschen mit dem Entlüftungsanschluss verbunden sind. Auf diese Weise kann auf einfache Weise ein "Loader-Unloader"-Regelungskonzept für die Druckluftversorgung realisiert werden, da mit der Verbindung beider Lufttrocknungskartuschen mit dem Entlüftungsanschluss automatisch die Förderung von Druckluft durch den Kompressor ebenfalls zum Entlüftungsanschluss erfolgen kann. Ein derartiger Betrieb ist insbesondere von Vorteil, wenn ein maximaler Befüllungsgrad der Druckluftanlage erreicht ist. Möglich, aber nicht zwingend erforderlich ist, dass ergänzend zu dem "Loader-Unloader"-Betrieb gleichzeitig eine Regeneration erfolgt, für die über ein entsprechendes Regenerationsventil eine Lufttrocknungskartusche oder beide Lufttrocknungskartuschen zwecks Regeneration mit getrockneter Druckluft durchströmt werden, die dann ebenfalls dem Entlüftungsanschluss zugeführt wird.

In weiterer Ausgestaltung der Erfindung ist die Steuerlogik geeignet ausgebildet, so dass über geeignete Ansteuerung der genannten Magnetventilen durch die Steuereinheit ein Betrieb ermöglicht wird, in dem beide Lufttrocknungskartuschen für einen Versorgungsbetrieb mit dem Kompressor verbunden werden und/oder zur Ermöglichung einer gemeinsamen Regeneration beide Lufttrocknungskartuschen für einen Regenerationsbetrieb mit dem Entlüftungsanschluss verbinden werden und die Durchströmung der Lufttrocknungskartuschen mit getrockneter Druckluft aus einem Reservoir ermöglicht wird, was vorzugsweise erfolgt, wenn kein oder lediglich ein verringerter Druckluftbedarf der Druckluftanlage besteht.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine Nutzfahrzeug-Druckluftaufbereitungseinrichtung gemäß dem Stand der Technik, hier ein Zweikammer-Lufttrockner gemäß dem Datenblatt für ein Produkt mit der Produkt-Nr. 432431 des Unternehmens WABCO.
- **Fig. 2 bis 9**: zeigen schematisch erfindungsgemäße Nutzfahrzeug-Druckluftaufbereitungseinrichtungen in unterschiedlichen Ausführungsformen.

### FIGURENBESCHREIBUNG

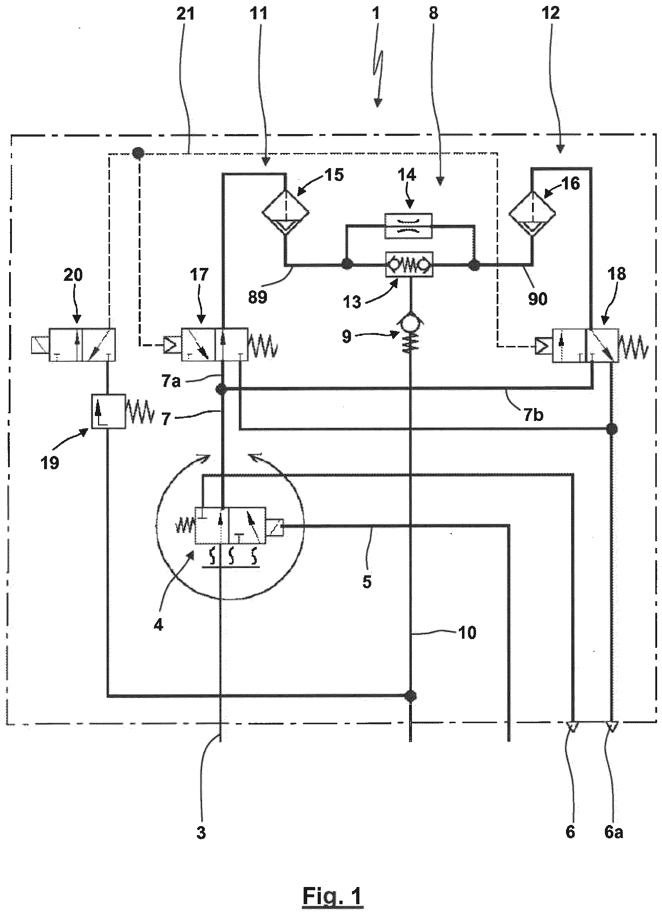

**Fig. 1** zeigt schematisch eine aus dem Stand der Technik bekannte Nutzfahrzeug-Druckluftaufbereitungseinrichtung 1 für ein Nutzfahrzeug. Der Nutzfahrzeug-Druckluftaufbereitungseinrichtung 1 wird Druckluft aus einem Kompressor 2 über eine Eingangsleitung 3 zugeführt. Zur Vorgabe eines Druckniveaus in der Nutzfahrzeug-Druckluftaufbereitungseinrichtung 1 ist die Eingangsleitung 3 mit einem Druckregelventil 4 verbunden. Für das dargestellte Ausführungsbeispiel ist das Druckregelventil 4 als pneumatisch schaltbares 3/2-Wegenventil ausgebildet. Je nach Druck in einer zugeordneten Steuerleitung 5 wird über das Druckregelventil 4 die Eingangsleitung 3 mit einem Entlüftungsanschluss 6 verbunden, so dass der Kompressor 2 Druckluft in die Umgebung fördert, oder mit einer Eingangsleitung 7 verbunden. Die Eingangsleitung 7 ist unter Zwischenschaltung einer Trocknungseinheit 8 mit nachgeordnetem Rückschlagventil 9 mit einer Zentralleitung 10 verbunden, die eine Druckluftanlage speist. In der Druckluftanlage versorgt die Zentralleitung 10 unterschiedliche Verbraucherkreise über Kreisschutzventile. In der Trocknungseinheit verzweigt die Eingangsleitung 7 in Teil-Eingangsleitungen 7a, 7b zwecks Begründung von zwei parallelen Leitungszweigen 11, 12, welche über ein stromaufwärts benachbart dem Rückschlagventil 9 angeordnetes Doppel-Rückschlagventil 13 wieder zusammengeführt sind. Parallel zu dem Doppel-Rückschlagventil 13 sind die beiden Leitungszweige 11 über eine Drossel 14 kurzgeschlossen. In den Leitungszweigen 11, 12 ist jeweils eine Lufttrocknungskartusche 15, 16 angeordnet. In den beiden Leitungszweigen 11, 12 ist den Lufttrocknungskartuschen 15, 16 jeweils ein pneumatisch gesteuertes 3/2-Wegeventil 17, 18 vorgeordnet. Die 3/2-Wegeventile 17, 18 werden von demselben Steuerdruck beaufschlagt, aber haben vertauschte Schaltstellungen wie folgt:
In der in Fig. 1 wirksamen Schaltstellung ohne anliegenden Steuerdruck verbindet das 3/2-Wegeventil 17 die Teil-Eingangsleitung 7a mit der Lufttrocknungskartusche 15, während das 3/2-Wegeventil 18 die Lufttrocknungskartusche 16 mit dem oder einem Entlüftungsanschluss 6a verbindet. Wird hingegen der Steueranschluss der 3/2-Wegeventile 17, 18 pneumatisch beaufschlagt mit hierdurch herbeigeführter Umschaltung der 3/2-Wegeventile 17, 18, verbindet das 3/2-Wegeventil 17 die Lufttrocknungskartusche 15 eingangsseitig mit dem Entlüftungsanschluss 6a, während der Eingangsanschluss der Lufttrocknungskartusche 16 über das 3/2-Wegeventil 18 mit der Teil-Eingangsleitung 7 verbunden wird. Der Steuerdruck für die 3/2-Wegeventile 17, 18 ist der Zentralleitung 10 entnommen und wird beeinflusst durch ein Überströmventil 19 sowie ein elektrisch angesteuertes 3/2-Wegeventil 20, welches in einer Schaltstellung Druckluft der Zentralleitung 10 als steuernde Druckluft durchlässt, während in der anderen Schaltstellung die Steuerleitung 21 mit einer Entlüftung des 3/2-Wegeventils 20 verbunden ist.

Die Funktion der aus dem Stand der Technik bekannten Nutzfahrzeug-Druckluftaufbereitungseinrichtung 1 ist wie folgt: In der Schaltstellung der 3/2-Wegeventile 17, 18 gemäß Fig. 1 erfolgt in dem Leitungszweig 11 ein Last- oder Versorgungsbetrieb, bei welchem von dem Kompressor geförderte Druckluft über die Eingangsleitung 3, das Druckregelventil 4, die Eingangsleitung 7, die Teil-Eingangsleitung 7a, das 3/2-Wegeventil 17, die Lufttrocknungskartusche 15, das Doppel-Rückschlagventil 13 sowie das Rückschlagventil 9 zur Zentralleitung 10 gelangt. Allerdings wird von dieser Druckluft ein Teilvolumenstrom über die Drossel 14 abgezweigt, welche in dem Leitungszweig 12 für einen Regenerationsbetrieb genutzt wird. Die von der Lufttrocknungskartusche 15 getrocknete Druckluft dieses Teilvolumenstroms durchströmt in "umgekehrter" Richtung die Lufttrocknungskartusche 16 und gelangt über das 3/2-Wegeventil 18 zu dem Entlüftungsanschluss 6a. Durch Umschaltung der 3/2-Wegeventile 17 kann die Nutzung der Leitungszweige 11, 12 umgekehrt werden, so dass der Leitungszweig 12 für einen Versorgungsbetrieb genutzt wird, während der Leitungszweig 11 im Regenerationsbetrieb genutzt wird. Hierbei ändert sich die Stellung des Doppel-Rückschlagventils 13 und die Durchströmungsrichtung der Drossel 14 kehrt sich um.

Problematisch bei der aus dem Stand der Technik bekannten Ausführungsform gemäß Fig. 1 kann sein, dass der Teilvolumenstrom, welcher über die Drossel 14 für die Regeneration genutzt wird, nicht geregelt werden kann. Vielmehr ist dieser durch den Querschnitt der Drossel 14 vorgegeben. Dies hat insbesondere zum Nachteil, dass bei Betrieb des Kompressors 2 mit Leerlaufdrehzahl das Verhältnis des für die Regeneration genutzten Teilluftstroms zu dem der Zentralleitung 10 zugeführten Teilluftstrom verhältnismäßig groß ist, während sich für eine Erhöhung der Drehzahl des Kompressors 2 der Anteil der genannten Teilluftströme verändert, ohne dass separate Regelungsmöglichkeiten bestehen.

Für die in den Fig. 2 bis 9 dargestellten Ausführungsformen der Erfindung werden dieselben Bezugszeichen verwendet wie für die entsprechenden pneumatischen Bauelemente in der aus dem Stand der Technik bekannten Ausführungsform gemäß Fig. 1, sofern diese grundsätzlich entsprechend aufgebaut sind und/oder zumindest teilweise vergleichbaren Funktionen dienen.

Gemäß dem in **Fig. 2** dargestellten Ausführungsbeispiel der Erfindung ist zunächst die Eingangsleitung 3 in an sich bekannter Weise über ein Sicherheitsventil 22 mit dem Entlüftungsanschluss 6 verbunden. Die Eingangsleitung 3 verzweigt über ein Ventil 23, hier ein 5/2-Wegeventil 24, in die beiden Leitungszweige 11, 12 mit den Lufttrocknungskartuschen 15, 16. Zwei Anschlüsse des 5/2-Wegeventils 24 sind mit den Eingängen der Lufttrocknungskartuschen 15, 16 verbunden, während zwei Anschlüsse mit dem Entlüftungsanschluss 6 verbunden sind und ein weiterer Anschluss mit der Eingangsleitung 3 verbunden ist. Während durchaus möglich ist, dass das Ventil 23 direkt elektrisch gesteuert ist, ist das Ventil 23 für das dargestellte Ausführungsbeispiel über eine Steuerleitung 25 pneumatisch gesteuert. Ausgangsseitig der Lufttrocknungskartuschen 15, 16 erfolgt jeweils eine Drucksicherung in Rückschlagventilen 9a, 9b, bevor die Leitungszweige 11, 12 zu der Zentralleitung 10 vereinigt werden. In der in Fig. 2 wirksamen Schaltstellung des 5/2-Wegeventils 24, in welcher die Steuerleitung 25 drucklos ist, verbindet das 5/2-Wegeventil 24 die Eingangsleitung 3 mit der Lufttrocknungskartusche 16, während die Lufttrocknungskartusche 15 mit dem Entlüftungsanschluss 6 verbunden ist. Somit wird in dieser Schaltstellung der Leitungszweig 12 für den Versorgungsbetrieb genutzt, während möglich ist, dass der Leitungszweig 11 für den Regenerationsbetrieb genutzt wird, was jedoch von weiteren Bedingungen, hier der Schaltstellung der weiteren Ventile abhängig sein kann, wie im Folgenden noch erläutert wird. Wird hingegen die Steuerleitung 25 druckbeaufschlagt, erfolgt eine Umschaltung des 5/2-Wegeventils 24 in eine Schaltstellung, in welcher die Lufttrocknungskartusche 15 mit der Eingangsleitung 3 verbunden ist, während die Lufttrocknungskartusche 16 mit dem Entlüftungsanschluss 6 verbunden ist.

Von der Zentralleitung 10 werden über Kreisschutzventile 26, 27, 28, 29, 30 Verbraucherkreise 31, 32, 33, 34, 35 gespeist. Bei dem Verbraucherkreis 31 handelt es sich um einen Betriebsbremskreis I mit einem vorgeordneten Behälter 36. Der Verbraucherkreis 32 ist ein Betriebsbremskreis II mit vorgeordnetem Behälter 37. Bei dem Verbraucherkreis 33 handelt es sich um einen Anhängerbremskreis, wobei hier ein Teil-Verbraucherkreis 33a für die Anhängerbremse zuständig sein kann, während ein paralleler Teilverbraucherkreis 33b für die Federspeicherbremse zuständig ist. Der Verbraucherkreis 34 dient der Versorgung von Nebenverbrauchern. Der Verbraucherkreis 35 ist mit einer Luftfederungsanlage gebildet, wozu in diesem ein Behälter 38 vorgesehen ist. Die Kreisschutzventile 26-30 dienen in an sich bekannter Weise insbesondere der Vorgabe der Befüllreihenfolge, der Drucksicherung und der Ermöglichung einer Querspeisung eines Verbraucherkreises aus einem anderen Verbraucherkreis im Normalbetrieb oder Defektfall, vorzugsweise aus einem Behälter des anderen Verbraucherkreises. Für das dargestellte Ausführungsbeispiel handelt es sich bei dem Kreisschutzventilen 26-28 um pneumatisch vorgesteuerte Überströmventile, bei welchen mittels pneumatischer Ansteuerung der Öffnungsdruck des Überströmventils reduziert werden kann oder die Funktion des Überströmventils durch eine Durchlassstellung überbrückt werden kann. Während die Kreisschutzventile 26, 27 unmittelbar mit den Behältern 36, 37 verbunden sind, ist dem Kreisschutzventil 28 ein Druckbegrenzungsventil 39 nachgeordnet. Der Ausgangsanschluss des Druckbegrenzungsventils 39 verzweigt zu den Teil-Verbraucherkreisen 33a, 33b, wobei in dem Teil-Verbraucherkreis 33b ein weiteres in Richtung des Teil-Verbraucherkreises 33b öffnendes Rückschlagventil 40 vorgesehen ist. Stromabwärts dieses Rückschlagventils 40 ist der Teil-Verbraucherkreis 33b über ein Sicherheitsventil 41 mit einem Entlüftungsanschluss 6a mit vorgeordnetem Rückschlagventil 42 verbunden. Das Kreisschutzventil 29 ist mit einer Reihenschaltung eines Überströmventils 43 sowie eines Druckbegrenzungsventils 44 ausgebildet. Hingegen ist das Kreisschutzventil 30 mit einem Überströmventil 45 mit nachgeordnetem Rückschlagventil 46 ausgebildet. Drucksensoren 47-50 erfassen die Drücke in den Verbraucherkreisen 31, 32, 33a sowie 35.

Die Nutzfahrzeug-Druckluftaufbereitungseinrichtung 1 verfügt über eine Steuereinheit 51 mit geeigneter Steuerlogik zur Erfüllung der im Folgenden erläuterten Steuerfunktionen. Der Steuereinheit 51 werden die von den Drucksensoren 47-50 erfassten Drucksignale zur Auswertung zugeführt.

Die Steuereinheit 51 steuert für das in Fig. 2 dargestellte Ausführungsbeispiel vier Magnetventile 52-55 an. Die Magnetventile 52-55 sind hier als 3/2-Wegeventile ausgebildet. Über eine von der Zentralleitung 10 abzweigende Speiseleitung 56 wird jeweils ein Anschluss der Magnetventile 52-55 mit Druckluft versorgt. Ein weiterer Anschluss der Magnetventile 52-55 ist jeweils mit einer Entlüftungsleitung 57 verbunden. Schließlich besitzen die Magnetventile 52-55 jeweils einen Anschluss, welcher mit einer Steuerleitung 58-60, 25 verbunden ist. Die Steuerleitung 58 ist einerseits mit einem Steueranschluss des Kompressors 2 verbunden. Darüber hinaus ist die Steuerleitung 58 mit einem Steueranschluss des Druckreglers 4 verbunden, der für druckbeaufschlagten Steueranschluss die Eingangsleitung 3 mit der Entlüftung 6 verbindet. Die Steuerleitung 59 ist zunächst mit den Steueranschlüssen der Kreisschutzventile 26, 27 verbunden, so dass für druckbeaufschlagten Steueranschluss die Öffnungsdrücke der Überströmventile reduziert werden oder die Überströmfunktion überbrückt ist. Die Steuerleitung 60 ist verbunden mit dem Steueranschluss des Kreisschutzventils 28. Die Steuerleitung 25 ist mit dem Steueranschluss des Ventils 23 verbunden.

Von der Zentralleitung 10 bzw. der Speiseleitung 56 zweigt eine Regenerationsleitung 62 ab, in welcher eine Drossel 14 angeordnet ist und die zu einem Regenerationsventil 63 führt. Das Regenerationsventil 63 kann durch die Steuereinheit 51 unmittelbar elektrisch angesteuert sein. Für das in Fig. 2 dargestellte Ausführungsbeispiel ist das Regenerationsventil 63 allerdings pneumatisch gesteuert, wozu der Steueranschluss des Regenerationsventils 63 mit der Steuerleitung 59 verbunden ist. Für das dargestellte Ausführungsbeispiel ist das Regenerationsventil 63 als 2/2-Wegeventil ausgebildet, welches ohne pneumatische Beaufschlagung der Steuerleitung 59 eine Sperrstellung einnimmt, während dieses eine Durchlassstellung einnimmt, wenn die Steuerleitung 59 druckbeaufschlagt wird. Ausgangsseitig des Regenerationsventils 63 liegt eine Verzweigung vor, von der Teil-Regenerationsleitungen 64a, 64b unter Zwischenschaltung von Rückschlagventilen 65a, 65b stromaufwärts der Rückschlagventile 9a, 9b, aber ausgangsseitig der Lufttrocknungskartuschen 15, 16 mit den Leitungszweigen 11, 12 verbunden sind.

Der Betrieb der Druckluftverarbeitungseinrichtung gemäß Fig. 2 ist beispielsweise wie folgt. Zur Druckluftversorgung einer mit den Verbraucherkreisen 31 - 35 gebildeten Druckluftanlage 67, sei es zur Nachversorgung im Betrieb oder zur Inbetriebnahme mit einer Befüllung der Druckluftanlage, erfolgt zunächst in der in der Fig. 2 nicht wirksamen Schaltstellung des Ventils 23 ein Versorgungsbetrieb in dem Leitungszweig 11. Hieran ist der Leitungszweig 12 nicht beteiligt. Vielmehr ist die Lufttrocknungskartusche 16 über das Ventil 23 mit dem Entlüftungsanschluss 6 verbunden. Die Rückführung von getrockneter Druckluft aus der Zentralleitung 10 ist einerseits durch das Rückschlagventil 9b unterbunden. Andererseits befindet sich zunächst das Regenerationsventil 63 in einer Sperrstellung, so dass auch keine Rückströmung getrockneter Druckluft über die Regenerationsleitungen 62, 64a erfolgt. In diesem Betriebszustand wird somit die gesamte von dem Kompressor 2 geförderte Druckluft in der Lufttrocknerkartusche 15 getrocknet und der Zentralleitung 10 sowie der Druckluftanlage 67 zugeführt. Erweist sich eine Regeneration der Lufttrocknungskartusche 16 als erforderlich, kann diese unabhängig von dem erläuterten Versorgungsbetrieb über den Leitungszweig 11 begonnen und beendet werden. Hierzu wird das Regenerationsventil 63 in seine Durchlassstellung umgeschaltet, indem über das Magnetventil 53 die Steuerleitung 59 druckbeaufschlagt wird. Somit kann ein durch die Drossel 14 dimensionierter Teilluftstrom von der Zentralleitung 10 über das Regenerationsventil 63 in seiner Durchlassstellung unter Öffnung des Rückschlagventils 65a der Lufttrocknungskartusche 16 zugeführt werden, diese im Regenerationsbetrieb in umgekehrter Richtung durchströmen und über das Ventil 23 dem Entlüftungsanschluss 6 zugeführt werden. Trotz geöffneten Regenerationsventils 63 ist der Übertritt von Druckluft aus dem Leitungszweig 11 in die Teil-Regenerationsleitung 64b infolge des sperrenden Rückschlagventils 65b unterbunden. Ist eine hinreichende, unter Umständen in der Steuereinheit 51 vorbestimmte Regenerationsluftmenge durch die Lufttrocknungskartusche 16 hindurchgeströmt, kann das Regenerationsventil 63 durch die Steuereinheit 51 geschlossen werden, was unabhängig von einem möglichen weiteren Versorgungsbetrieb im Leitungszweig 11 erfolgen kann. Die verwendete Regenerationsluft kann unmittelbar dem Leitungszweig 11 entstammen und somit in der Nutzfahrzeug-Druckluftaufbereitungseinrichtung 1 zurückgeführt werden, ohne zu der Druckluftanlage 67 zu gelangen. Ebenfalls möglich ist, dass die Regenerationsluft einem Behälter der Druckluftanlage 67 entnommen wird, beispielsweise mindestens einem der Behälter 36, 37 der Betriebsbremskreise. Möglich ist auch, dass über die Steuerleitung 58 die Druckluftförderung des Kompressors 2 verringert oder deaktiviert wird. Möglich ist weiterhin, dass für geöffneten Druckregler 4 der Kompressor 2 in die Umgebung fördert. In diesem Fall kann sogar ermöglicht werden, dass aus einem der Behälter 36, 37 für geöffnetes Regenerationsventil 63 mit Öffnung beider Rückschlagventile 65a, 65b Regenerationsluft beide Lufttrocknungskartuschen 15, 16 zwecks Regeneration durchströmt und dem Anschluss 6 zugeführt wird. Möglich ist auch, dass während des Versorgungsbetriebs über den Leitungszweig 11 mehrere kürzere Regenerationsphasen in dem anderen Leitungszweig durchgeführt werden oder eine Regenerationsphase temporär unterbrochen wird.

Nach einer Zeitspanne eines Versorgungsbetriebs über den Leitungszweig 11, die a-priori vorgegeben sein kann oder im Betrieb durch die Steuereinheit 51 ermittelt wird, erfolgt ein Wechsel zu einem Versorgungsbetrieb über den Leitungszweig 12. Dieser Wechsel wird bewerkstelligt durch Umschaltung des Ventils 23 durch pneumatische Entlüftung der Steuerleitung 25 mit dem Magnetventil 55. Auch während des Versorgungsbetriebs über den Leitungszweig 12 kann analog der zuvor beschriebenen Weise eine Regeneration der Lufttrocknungskartusche 15 im Leitungszweig 11 unabhängig begonnen und beendet werden durch Ansteuerung des Regenerationsventils 63, wobei in diesem Fall das Rückschlagventil 65b von Regenerationsluft durchströmt wird.

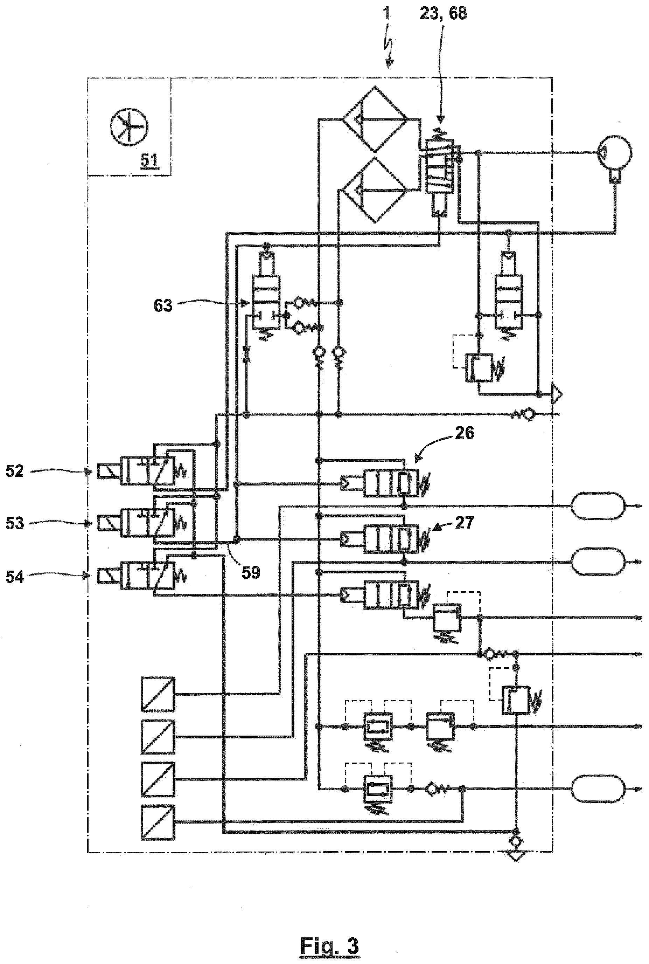

Während für das Ausführungsbeispiel gemäß Fig. 2 das Magnetventil 55 ausschließlich für die pneumatische Ansteuerung des Ventils 23 zuständig war, kann bei ansonsten im Wesentlichen entsprechender Ausgestaltung gemäß **Fig. 3** das Magnetventil 55 entfallen. Für dieses Ausführungsbeispiel ist die Steuerleitung 59 mit den Steueranschlüssen der Kreisschutzventile 26, 27 und dem Steueranschluss des Regenerationsventils 63 verbunden, wie dies auch für Fig. 2 der Fall war. Zusätzlich ist die Steuerleitung 59 auch mit dem Steueranschluss des Ventils 23 verbunden. Das Ventil 23 ist in diesem Fall als so genanntes "bistabiles" Ventil 68 ausgebildet. Ein derartiges bistabiles Ventil verharrt ohne pneumatische Ansteuerung in einer einmal eingenommenen Schaltstellung und verlässt diese erst wieder bei erneuter, entsprechender pneumatischer Ansteuerung. Das bistabile Ventil 68 kann, abweichend zum dargestellten Ausführungsbeispiel, unmittelbar elektrisch angesteuert sein. Ebenfalls möglich ist die pneumatische Ausbildung des bistabilen Ventils mit einem Steueranschluss, wie dies beispielsweise in DE 10 2008 038 437 A1 mit einer Art "Kugelschreibermechanik" beschrieben ist, für welche mit anliegendem Druck eine Schaltstellung gehalten wird, während die Schaltstellung veränderbar ist durch kurze Druckentlastung und erneute Druckbeaufschlagung der Steuerleitung 59.

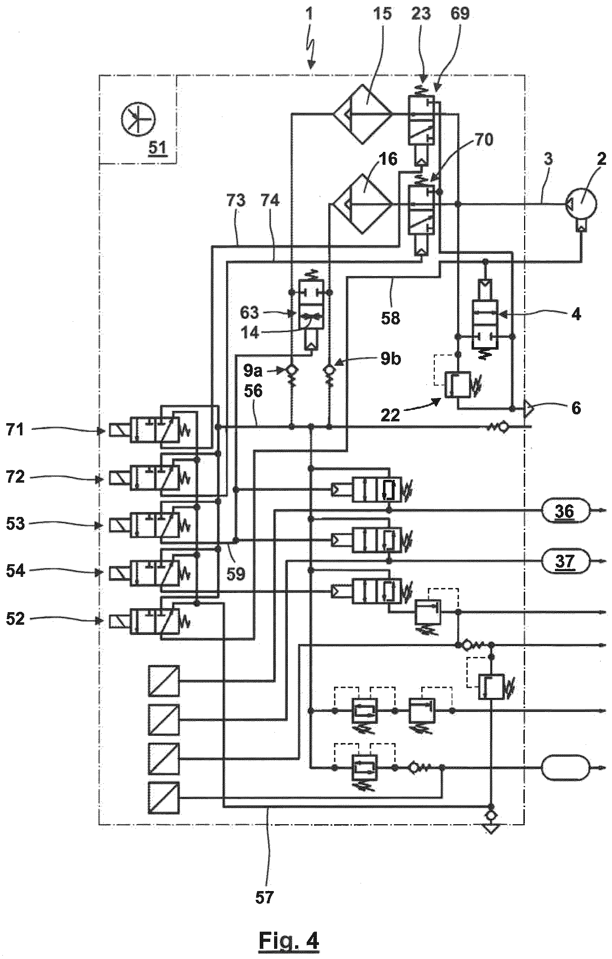

Gemäß dem in **Fig. 4** dargestellten Ausführungsbeispiel ist das Ventil 23 mit zwei hier pneumatisch angesteuerten 3/2-Wegeventilen 69, 70 gebildet, die jeweils einer Lufttrocknungskartusche 15, 16 vorgeordnet sind. In der in Fig. 4 wirksamen Schaltstellung verbinden die 3/2-Wegeventile 69, 70 die Eingangsleitung 3 sowie den Kompressor 2 mit den zugeordneten Lufttrocknungskartuschen 15, 16, während in der in Fig. 4 nicht wirksamen Schaltstellung der 3/2-Wegeventile 69, 70 die Eingangsseiten der Lufttrocknungskartuschen 15, 16 mit der Entlüftung 6 verbunden sind. Die Ansteuerung der 3/2-Wegeventile 69, 70 erfolgt jeweils über ein zugeordnetes Magnetventil 71, 72, welches über die Steuereinheit 51 gesteuert wird und mittels welcher mit den Steueranschlüssen der 3/2-Wegeventile 69, 70 verbundene Steuerleitungen 73, 74 entweder mit der Speiseleitung 56 oder der Entlüftungsleitung 7 verbunden werden können. Während das Ventil 23 gemäß Fig. 2 grundsätzlich lediglich die wechselseitige Verbindung der Leitungszweige 11, 12 mit dem Kompressor ermöglicht hat, aber die unabhängige Steuerung der Verbindungen für den Versorgungsbetrieb und den Regenerationsbetrieb mit dem Regenerationsventil 63 bewerkstelligt werden konnte, ermöglicht die Ausbildung des Ventils 23 mit den beiden 3/2-Wegeventilen 69, 70 je nach Bestromung der Magnetventile 71, 72 drei unabhängige Verbindungsmöglichkeiten für den Eingang der Lufttrocknungskartuschen 15, 16:
- Verbindung des Eingangs der Lufttrocknungskartusche 15 mit dem Kompressor 2, Verbindung des Eingangs der Lufttrocknungskartusche 16 mit dem Entlüftungsanschluss 6;
- Verbindung des Eingangs der Lufttrocknungskartusche 16 mit dem Kompressor 2, Verbindung des Eingangs der Lufttrocknungskartusche 15 mit dem Entlüftungsanschluss 6;
- Verbindung der Eingänge beider Lufttrocknungskartuschen 15, 16 mit dem Kompressor 2;
- Verbindung der Eingänge beider Lufttrocknungskartuschen 15, 16 mit dem Entlüftungsanschluss 6.

Die vorgenannten Betriebsstellungen ermöglichen somit grundsätzlich unabhängig voneinander die Durchführung eines Lastbetriebs in einer der Lufttrocknungskartuschen 15, 16, die Durchführung eines Regenerationsbetriebs einer der Lufttrocknungskartuschen 15, 16, einen gleichzeitigen Lastbetrieb der Lufttrocknungskartuschen 15, 16 und/oder einen gleichzeitigen Regenerationsbetrieb der Lufttrocknungskartuschen 15, 16.

Weiterhin abweichend zu dem Ausführungsbeispiel gemäß Fig. 2 ist gemäß Fig. 4 das Regenerationsventil 63 ausgebildet und integriert: Zunächst ist die Drossel 14 in das Regenerationsventil 63 integriert, so dass diese in der Durchlassstellung wirksam wird. Darüber hinaus ist das Regenerationsventil 63 nicht über die Regenerationsleitung 62 gespeist. Vielmehr ist das Regenerationsventil 63 hier unmittelbar zwischen die ausgangsseitigen Leitungen der Lufttrocknungskartuschen 15, 16 zwischengeschaltet, was aber vor den Rückschlagventilen 9a, 9b erfolgt. Es versteht sich, dass anstelle der beiden Rückschlagventile 9a, 9b ein einziges Doppel-Rückschlagventil 13 verwendet werden kann.

Während der Befüllungsphase erfolgt für die Ausführungsform gemäß Fig. 3 vorrangig die Befüllung der Behälter 36, 37 der Betriebsbremskreise, wozu die Kreisschutzventile 26, 27 durch Druckbeaufschlagung der Steuerleitung 59 in ihre Durchlassstellung oder Überbrückungsstellung geschaltet werden können. Zwar wird hiermit gleichzeitig das Regenerationsventil 63 in seine Durchlassstellung geschaltet. Dies ist aber unter Umständen ohne Wirkung, da in den Leitungszweigen 11 bzw. 12 ein höherer Druck vorliegt als in der Regenerationsleitung 62, so dass dann die Rückschlagventile 65a, 65b sperren können. Sind hingegen die Behälter 36, 37 gefüllt, kann mit gleichzeitiger Beaufschlagung der Steueranschlüsse der Kreisschutzventile 26, 27 sowie des Regenerationsventils 63 die gewünschte Regeneration herbeigeführt werden mit Verwendung von getrockneter Druckluft aus den Behältern 36, 37. Hingegen ermöglicht die Ausführungsform gemäß Fig. 4 keine Regeneration mit Druckluft aus den Behältern 36, 37.

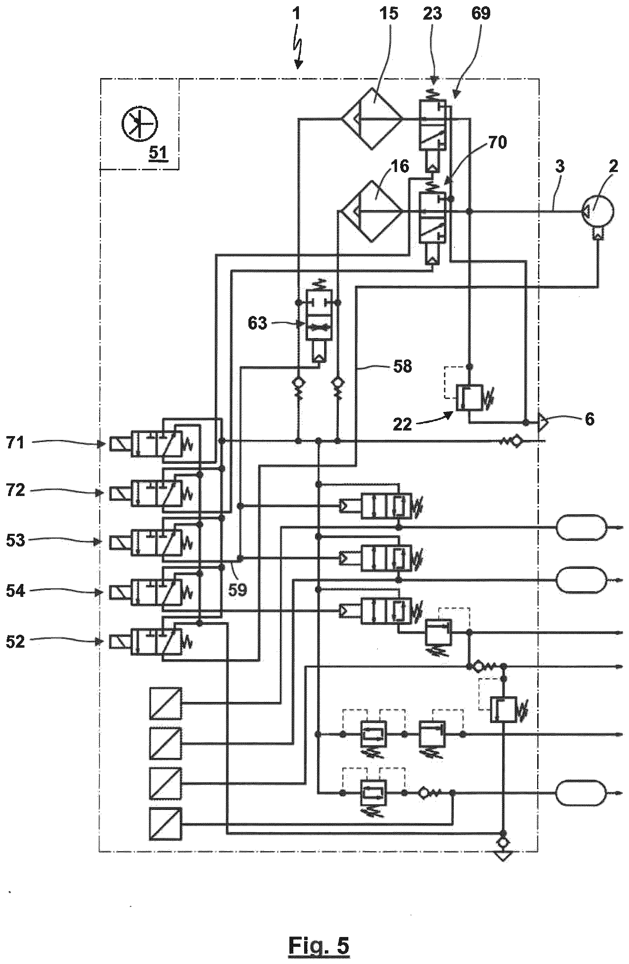

Die Ausführungsform gemäß **Fig. 5** entspricht im Wesentlichen der Ausgestaltung gemäß Fig. 4. Allerdings steuert in diesem Fall das Magnetventil 52 lediglich den Steueranschluss des Kompressors 2 über die Steuerleitung 58 an. Grund hierfür ist, dass der Druckregler 4 entfallen ist, so dass die Eingangsleitung 3 lediglich über das Sicherheitsventil 22 mit dem Entlüftungsanschluss 6 unmittelbar verbunden ist. In diesem Fall kann beispielsweise eine Druckregelung über die Steuerung des Kompressors 2 erfolgen.

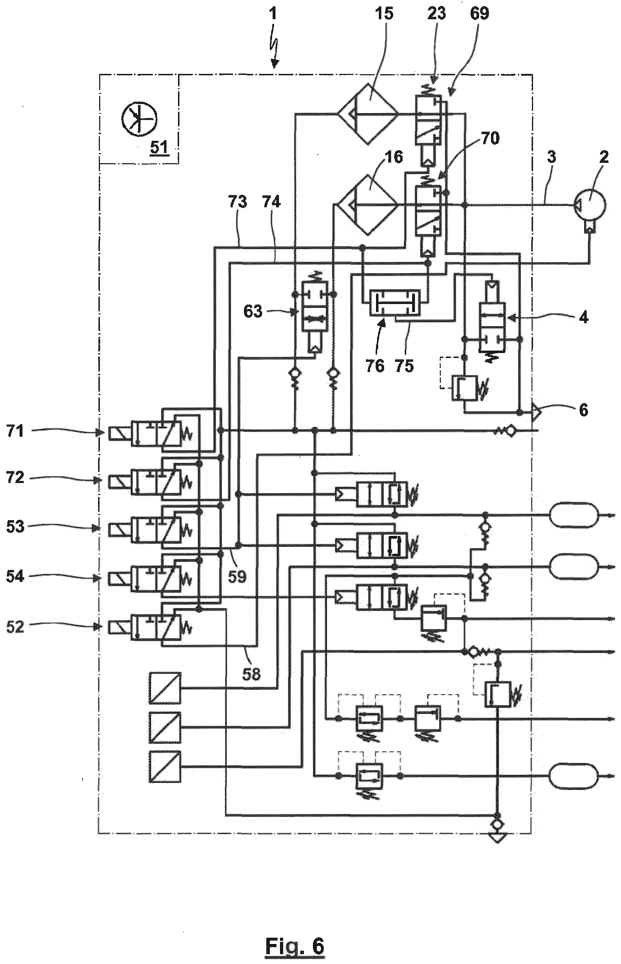

Die Ausführungsform gemäß **Fig. 6** entspricht grundsätzlich der Ausführungsform gemäß Fig. 4. Allerdings steuert das Magnetventil 52 mittels der Steuerleitung 58 lediglich den Steueranschluss des Kompressors 2 an. Der Druckregler 4 wird in diesem Fall von einer Steuerleitung 75 angesteuert, deren Steuerdruck von einem Ventil 76 vorgegeben ist. Dem Ventil 76 wird der Druck der Steuerleitungen 73, 74 zugeführt. Das Ventil 76 ist als eine Art "&-Glied" ausgeführt derart, dass die Steuerleitung 75 nur druckbeaufschlagt wird, wenn sowohl die Steuerleitung 73 als auch die Steuerleitung 74 druckbeaufschlagt ist, während die Steuerleitung 75 drucklos ist, wenn mindestens eine der Steuerleitungen 73, 74 drucklos ist. Somit wird der Druckregler 4 automatisch in die Entlüftungsstellung verbracht, wenn beide Steuerleitungen 73, 74 druckbeaufschlagt sind, also die 3/2-Wegeventile 69, 70 beide in einer Schaltstellung sind, in welcher die Eingänge der Lufttrocknungskartuschen 15, 16 mit dem Entlüftungsanschluss 6 verbunden sind. Die Ausführungsform gemäß Fig. 6 ermöglicht somit eine Steuerung des Druckreglers 4 gemeinsam über die Magnetventile 71, 72.

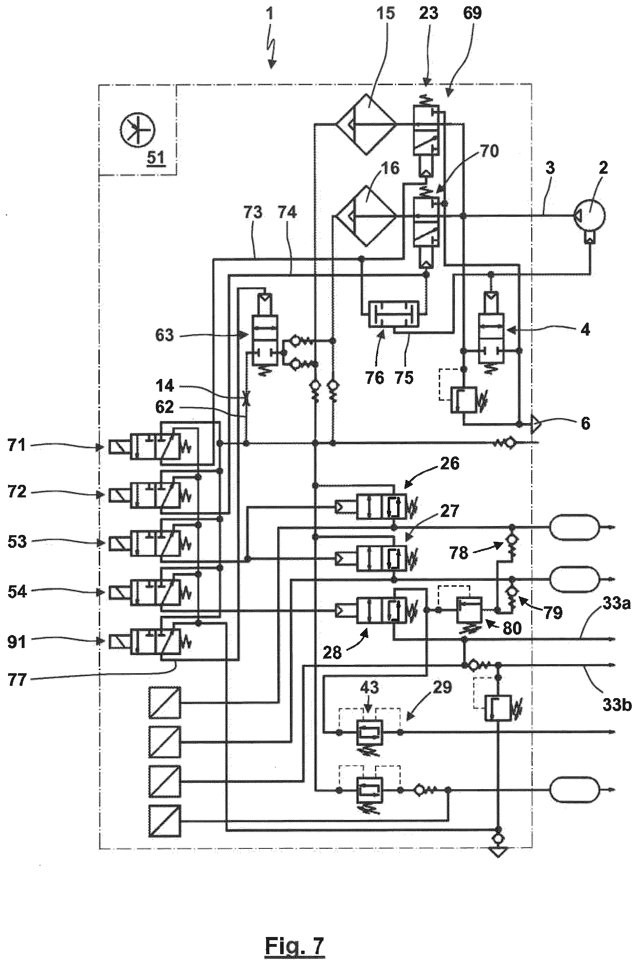

Die Ausführungsform gemäß **Fig. 7** entspricht im Wesentlichen der Ausführungsform gemäß Fig. 6, wobei allerdings hier das Magnetventil 53 lediglich zur Ansteuerung der Kreisschutzventile 26, 27 dient. Weiterhin ist das Magnetventil 52 mit der Steuerleitung 58 zur Ansteuerung des Kompressors 2 hier entfallen. Stattdessen ist der Steueranschluss des Kompressors 2 mit der Steuerleitung 75 des Ventils 76 verbunden. Ein zusätzliches Magnetventil 91 in Ausbildung als 3/2-Wegeventil ist vorgesehen, welches ebenfalls von der Steuereinheit 51 zwecks Be- und Entlüftung einer Steuerleitung 77 angesteuert wird. Die Steuerleitung 77 ist mit dem Steueranschluss des Regenerationsventils 63 verbunden, so dass dieses separat ansteuerbar ist. Das Regenerationsventil 63 ist hier der Regenerationsleitung 62 mit Drossel 14 nachgeordnet sowie den Regenerationsleitungen 64a, 64b mit Rückschlagventilen 65a, 65b vorgeordnet entsprechend der Ausführungsform gemäß Fig. 2. Weiterhin ist gemäß Fig. 7 das Kreisschutzventil 29 ausschließlich mit einem Überströmventil 43 gebildet. Dieses ist nicht direkt mit der Zentralleitung 10 verbunden, sondern vielmehr kumulativ unter Zwischenschaltung von Rückschlagventilen 78, 79, eines Druckbegrenzungsventils 80 sowie des Kreisschutzventils 28 gespeist. Entsprechendes gilt für die Verbraucherkreise 33a, 33b.

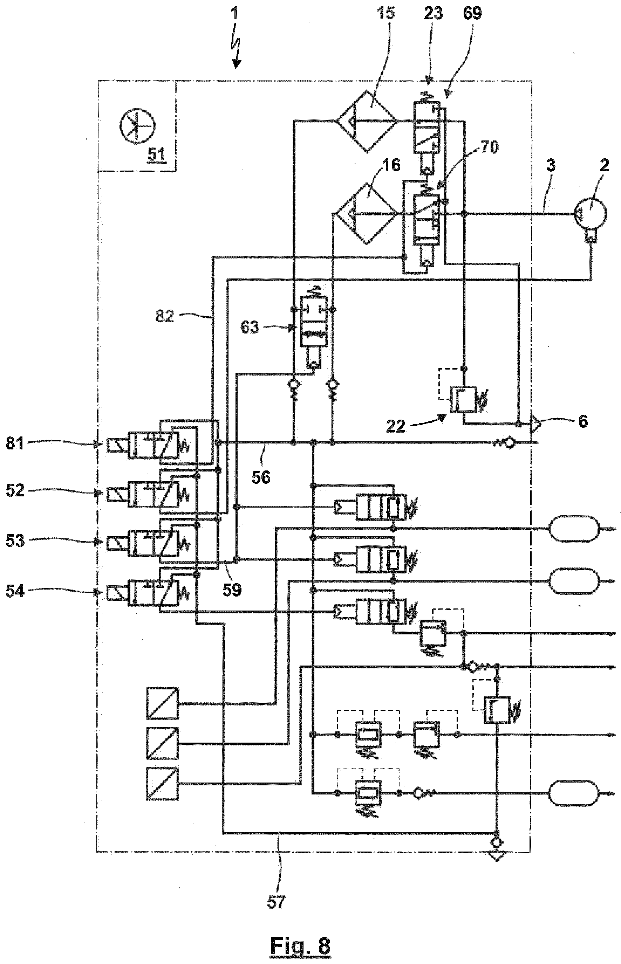

**Fig. 8** zeigt eine gegenüber Fig. 5 abgewandelte Ausführungsform, bei welcher ein Magnetventil eingespart ist. Anstelle der Magnetventile 71, 72 findet ein gemeinsames, über die Steuereinheit 51 gesteuertes Magnetventil 81 in Ausgestaltung als 3/2-Wegeventil Einsatz, dessen Steuerleitung 82 durch Verbindung mit der Speiseleitung 56 oder der Entlüftungsleitung 57 be- und entlüftet werden kann. Die Steuerleitung 82 ist mit den Steueranschlüssen der 3/2-Wegeventile 69, 70 verbunden, so dass diese gemeinsam angesteuert werden. Dies erfordert, dass die Schaltstellungen der 3/2-Wegeventile 69, 70 gemäß Fig. 8 vertauscht sind gegenüber den Schaltstellungen gemäß Fig. 5, so dass in dem in Fig. 8 wirksamen Schaltzustand für drucklose Steuerleitung 82 das 3/2-Wegeventil 69 die Lufttrocknungskartusche 15 mit dem Kompressor 2 verbindet, während das 3/2-Wegeventil 70 die Lufttrocknungskartusche 16 mit dem Entlüftungsanschluss 6 verbindet. Diese Anordnung ermöglicht somit lediglich die "gegenläufige" Nutzung der 3/2-Wegeventile, was der Wirkung des 5/2-Wegeventils 24 gemäß Fig. 2 sehr nahe kommt. Dennoch kann für diese Ausgestaltungsform durch insbesondere Betätigung des Regenerationsventils 63 unabhängig von einem Versorgungsbetrieb in einem Leitungszweig 11, 12 eine Regeneration in dem anderen Leitungszweig 12, 11 initiiert, aufrecht erhalten und beendet werden.

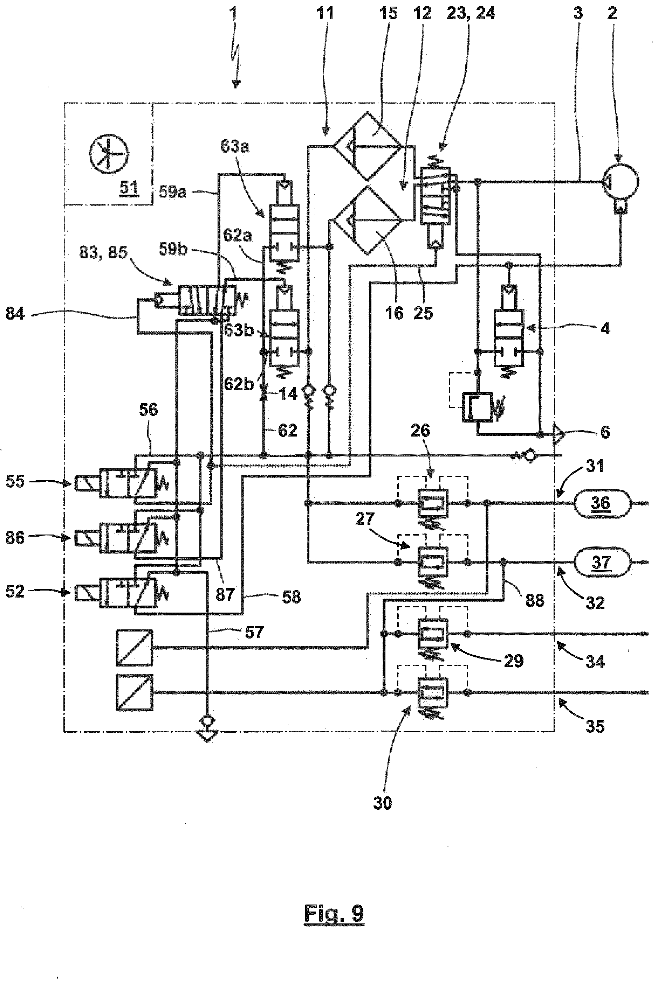

Während für die Ausführungsform gemäß **Fig. 9** das 5/2-Wegeventil 24, der Druckregler 4 sowie das Sicherheitsventil 22 entsprechend Fig. 2 ausgestaltet, integriert und angesteuert sind, erfolgt hier eine Steuerung des Regenerationsbetriebs auf abweichende Weise: Die Regenerationsleitung 62 verzweigt hier hinter der Drossel 14 in Teil-Regenerationsleitungen 62a, 62b, über welche jeweils ein Regenerationsventil 63a, 63b mit trockener Regenerationsluft gespeist werden kann. Bei den Regenerationsventilen 63a, 63b handelt es sich jeweils um 2/2-Wegeventile mit einer Sperrstellung sowie einer Durchlassstellung. Während die Regenerationsventile 63a, 63b durchaus unmittelbar elektrisch angesteuert werden können durch die Steuereinheit 51, offenbart Fig. 9 eine Ausführungsform, in welcher die Regenerationsventile 63a, 63b pneumatisch angesteuert werden und sich ohne Druckbeaufschlagung in ihrer Sperrstellung befinden. Die Regenerationsventile 63a, 63b sind jeweils auf der den Teil-Regenerationsleitungen 62a, 62b abgewandten Seite mit der ausgangsseitigen Leitung der Lufttrocknungskartusche 15 bzw. der Lufttrocknungskartusche 16 verbunden. Die Steuerleitungen 59a, 59b der Regenerationsventile 63a, 63b werden gesteuert durch ein Ventil 83, welches für das in Fig. 9 dargestellte Ausführungsbeispiel ein über eine Steuerleitung 84 gesteuertes 5/2-Wegeventil 85 ist. Die Steuerleitung 84 zweigt hierbei ab von der Steuerleitung 25, so dass der Steuerdruck für das 5/2-Wegeventil 85 durch das Magnetventil 55 vorgegeben werden kann.

Die Nutzfahrzeug-Druckluftaufbereitungseinrichtung 1 gemäß Fig. 9 verfügt über ein weiteres Magnetventil 86 in Ausbildung als 3/2-Wegeventil mit Ansteuerung durch die Steuereinheit 51, über welches eine Steuerleitung 87 mit einer Entlüftungsleitung 57 oder einer Speiseleitung 56 verbindbar ist. Das 5/2-Wegeventil 85 verbindet in der in Fig. 9 wirksamen Schaltstellung die Steuerleitung 59a mit der Entlüftungsleitung 57, was zur Folge hat, dass das Regenerationsventil 63a die in Fig. 9 wirksame Sperrstellung einnimmt. Wird hingegen durch Bestromung des Magnetventils 55 und Druckbeaufschlagung der Steuerleitung 84 das 5/2-Wegeventil 85 umgeschaltet, verbindet dieses die Steuerleitung 59b des Regenerationsventils 63b mit der Entlüftungsleitung 57, so dass das Regenerationsventil 63b die Sperrstellung einnimmt. Damit kann das 5/2-Wegeventil in jeder Schaltstellung zunächst gezielt eines der Regenerationsventile 63a, 63b in seine Sperrstellung überführen. Die Schaltstellung des anderen Regenerationsventils 63a, 63b ist allerdings nicht allein von der Schaltstellung des 5/2-Wegeventils 85 abhängig. Vielmehr wird die Steuerleitung 59a, 59b des anderen Regenerationsventils 63a, 63b jeweils in einer Schaltstellung des 5/2-Wegeventils 85 verbunden mit der Steuerleitung 87, die entsprechend der elektrischen Ansteuerung des Magnetventils 87 be- und entlüftet werden kann. Somit kann letztendlich durch elektrische Ansteuerung des Magnetventils 87 ein Regenerationsbetrieb initiiert und beendet werden.

Weiterhin finden gemäß Fig. 9 abweichend zu den anderen dargestellten Ausführungsformen in den Verbraucherkreisen 31, 32, 34, 35 keine ansteuerbaren Kreisschutzventile Einsatz. Vielmehr sind die Verbraucherkreise 31, 32 über Kreisschutzventile 26, 27 gespeist, die als Überströmventile ausgebildet sind. Zwischen dem Kreisschutzventil 27 und dem Behälter 37 zweigt eine Leitung 88 ab, über welche die Versorgungskreise 34, 35 mit den Kreisschutzventilen 29, 30 in Ausbildung als nicht ansteuerbare Überströmventile versorgt werden.

Mischformen der unterschiedlichen Ausführungsformen gemäß Fig. 2-9 sind möglich und werden hiermit angeregt. Die dargestellten Ausführungsformen zeigen die grundsätzlichen pneumatischen und elektropneumatischen Lösungsmöglichkeiten für die einzelnen gewünschten Funktionalitäten, die wahlweise miteinander kombiniert werden können.

Vorzugsweise findet die erfindungsgemäße Nutzfahrzeug-Druckluftaufbereitungseinrichtung 1 Einsatz mit einer 100 %-Einschaltdauer des Kompressors. Mit der erfindungsgemäßen Luftaufbereitungseinrichtung 1 kann ein erhöhter Luftbedarf befriedigt werden, was unter Umständen auch unter Verringerung der Volumina der vorhandenen Behälter in der Druckluftanlage möglich ist. Dies ist insbesondere von Vorteil bei so genannten Wechselbrücken-Fahrzeugen, welche dem Umsetzen von Containern dienen. Das Umsetzen mit ständig wechselnder Be- und Entlastung erfordert einen erhöhten Luftbedarf, da eine ständige Höhenregelung der Luftfederung erfolgt während des Be- und Entladens. Ebenfalls insbesondere von Vorteil ist die erfindungsgemäße Ausgestaltung für Stadtbussysteme, bei denen mit hoher Frequenz eine Abbremsung des Fahrzeugs über die Betriebsbremskreise erfolgt. Hieran anschließend wird dann unter Umständen noch die Feststellbremse aktiviert. Darüber hinaus ist die Regelung der Luftfederungsanlage für ein Absenken und Anheben des Stadtbussystems zur Ermöglichung des Zutritts der Passagiere mit einem erhöhten Druckluftverbrauch verbunden.

Möglich ist, dass durch Wahl der Regenerationszeiten und Dauern eine Anpassung des Drucks in dem System erfolgt. Möglich ist auch, dass für die Regelung des Kompressors, des Versorgungsbetriebs und/oder den Regenerationsbetrieb ein Schubbetrieb, in welchem eine Förderung mit einem erhöhten Druck ohne Einbußen erfolgen kann, berücksichtigt wird. Ebenfalls möglich ist, dass erfindungsgemäß ein Ausfall eines Teilssystems oder Verbraucherkreis durch die Regelung berücksichtigt wird, indem die Regenerationsdauer verändert wird.

Hinsichtlich der Leitungszweige 11, 12 bzw. der Lufttrocknungskartuschen 15, 16 beziehen sich in der vorliegenden Beschreibung Angaben wie *"eingangsseitig"* und *"ausgangsseitig"* oder "s*tromaufwärts"* oder "*stromabwärts*" auf einen Versorgungsbetrieb, wobei in einem Regenerationsbetrieb eine derartig bezeichnete "Eingangsseite" tatsächlich bezüglich der strömenden Druckluft "ausgangsseitig" angeordnet ist. Beispielsweise sind Gemäß Fig. 2 die Eingangsleitungen 7a, 7b, die Lufttrocknungskartuschen 15, 16 sowie die Ausgangsleitungen 89, 90 für den Versorgungsbetrieb in dieser Reihenfolge von der vom Kompressor geförderten Druckluft durchströmt, während für den Regenerationsbetrieb die getrocknete Druckluft von der Ausgangsleitung 89, 90 durch die Lufttrocknungskartusche 15, 16 zu den Eingangsleitungen 7a, 7b strömt.

### BEZUGSZEICHENLISTE

- 1: Nutzfahrzeug-Druckluftaufbereitungseinrichtung
- 2: Kompressor
- 3: Eingangsleitung
- 4: Druckregelventil
- 5: Steuerleitung
- 6: Entlüftungsanschluss
- 7: Eingangsleitung
- 8: Trocknungseinheit
- 9: Rückschlagventil
- 10: Zentralleitung
- 11: Leitungszweig
- 12: Leitungszweig
- 13: Doppel-Rückschlagventil
- 14: Drossel
- 15: Lufttrocknungskartusche
- 16: Lufttrocknungskartusche
- 17: 3/2-Wegeventil
- 18: 3/2-Wegeventil
- 19: Überströmventil
- 20: 3/2-Wegeventil
- 21: Steuerleitung
- 22: Sicherheitsventil
- 23: Ventil
- 24: 5/2-Wegeventil
- 25: Steuerleitung
- 26: Kreisschutzventil
- 27: Kreisschutzventil
- 28: Kreisschutzventil
- 29: Kreisschutzventil
- 30: Kreisschutzventil
- 31: Verbraucherkreis
- 32: Verbraucherkreis
- 33: Verbraucherkreis
- 34: Verbraucherkreis
- 35: Verbraucherkreis
- 36: Behälter
- 37: Behälter
- 38: Behälter
- 39: Druckbegrenzungsventil
- 40: Rückschlagventil
- 41: Sicherheitsventil
- 42: Rückschlagventil
- 43: Überströmventil
- 44: Druckbegrenzungsventil
- 45: Überströmventil
- 46: Rückschlagventil
- 47: Drucksensor
- 48: Drucksensor
- 49: Drucksensor
- 50: Drucksensor
- 51: Steuereinheit
- 52: Magnetventil
- 53: Magnetventil
- 54: Magnetventil
- 55: Magnetventil
- 56: Speiseleitung
- 57: Entlüftungsleitung
- 58: Steuerleitung
- 59: Steuerleitung
- 60: Steuerleitung

- 62: Regenerationsleitung
- 63: Regenerationsventil
- 64: Regenerationsleitung
- 65: Rückschlagventil
- 67: Druckluftanlage
- 68: bistabiles Ventil
- 69: 3/2-Wegeventil
- 70: 3/2-Wegeventil
- 71: Magnetventil
- 72: Magnetventil
- 73: Steuerleitung
- 74: Steuerleitung
- 75: Steuerleitung
- 76: Ventil
- 77: Steuerleitung
- 78: Rückschlagventil
- 79: Rückschlagventil
- 80: Druckbegrenzungsventil
- 81: Magnetventil
- 82: Steuerleitung
- 83: Ventil
- 84: Steuerleitung
- 85: 5/2-Wegeventil
- 86: Magnetventil
- 87: Steuerleitung
- 88: Leitung
- 89: Ausgangsleitung
- 90: Ausgangsleitung
- 91: Magnetventil

## Patentansprüche

1. Nutzfahrzeug-Druckluftaufbereitungseinrichtung (1) mit
a) einer Zentralleitung, von der mehrere Verbraucher abzweigen, wobei der Druck in der Zentralleitung durch mindestens ein Rückschlagventil gesichert ist, und
b) zwei in parallelen Leitungszweigen (11, 12) angeordneten Lufttrocknungskartuschen (15, 16),
c) wobei ein Regenerationsbetrieb einer Lufttrocknungskartusche (15; 16) unabhängig von einem Versorgungsbetrieb der anderen Lufttrocknungskartusche (16; 15) steuerbar ist,
d) Ausgangsleitungen (89, 90) der Lufttrocknungskartuschen (15, 16) über ein Regenerationsventil (63) miteinander verbunden sind oder die über das mindestens eine Rückschlagventil (9) gesicherte Zentralleitung (10) der Nutzfahrzeug-Druckluftaufbereitungseinrichtung (1) über mindestens ein Regenerationsventil (63; 63a, 63b) mit Ausgangsleitungen (89, 90) der Lufttrocknungskartuschen (15, 16) verbunden ist und
e) eine elektronische Steuereinheit (51) mit einer Steuerlogik vorgesehen ist, über welche ein Kompressor (2) sowohl mit einer als auch mit beiden Lufttrocknungskartuschen (15, 16) verbindbar ist.

2. Nutzfahrzeug-Druckluftaufbereitungseinrichtung (1), insbesondere Nutzfahrzeug-Druckluftaufbereitungseinrichtung (1) nach Anspruch 1, mit
a) einer Zentralleitung, von der mehrere Verbraucher abzweigen, wobei der Druck in der Zentralleitung durch mindestens ein Rückschlagventil gesichert ist, und
b) zwei in parallelen Leitungszweigen (11, 12) angeordneten Lufttrocknungskartuschen (15, 16),
c) wobei ein Regenerationsbetrieb einer Lufttrocknungskartusche (15; 16) unabhängig von einem Versorgungsbetrieb der anderen Lufttrocknungskartusche (16; 15) steuerbar ist,
d) Ausgangsleitungen (89, 90) der Lufttrocknungskartuschen (15, 16) über ein Regenerationsventil (63) miteinander verbunden sind oder die über das mindestens eine Rückschlagventil (9) gesicherte Zentralleitung (10) der Nutzfahrzeug-Druckluftaufbereitungseinrichtung (1) über mindestens ein Regenerationsventil (63; 63a, 63b) mit Ausgangsleitungen (89, 90) der Lufttrocknungskartuschen (15, 16) verbunden ist und
e) eine elektronische Steuereinheit (51) mit einer Steuerlogik vorgesehen ist, über welche ein Regenerationsbetrieb einer Lufttrocknungskartusche (15; 16) unabhängig von dem Versorgungsbetrieb der anderen Lufttrocknungskartusche (16; 15) beendet oder begonnen wird.

3. Nutzfahrzeug-Druckluftaufbereitungseinrichtung (1) nach Anspruch 1 oder 2, **dadurch gekennzeichnet, dass** den Lufttrocknungskartuschen (15, 16) mindestens ein Ventil (23; 24; 68; 69, 70) vorgeordnet ist, über welches selektiv eine Lufttrocknungskartusche (15) oder die andere Lufttrocknungskartusche (16) mit dem Kompressor (2) und/oder mit dem Entlüftungsanschluss (6) verbindbar ist.

4. Nutzfahrzeug-Druckluftaufbereitungseinrichtung (1) nach Anspruch 3, **dadurch gekennzeichnet, dass** über das mindestens eine den Lufttrocknungskartuschen (15, 16) vorgeordnete Ventil (23; 24; 68; 69, 70) oder ein weiteres Ventil beide Lufttrocknungskartuschen (15, 16) gleichzeitig mit dem Kompressor (2) und/oder mit dem Entlüftungsanschluss (6) verbindbar sind.

5. Nutzfahrzeug-Druckluftaufbereitungseinrichtung (1) nach Anspruch 3 oder 4, **dadurch gekennzeichnet, dass** das mindestens eine Ventil (23; 24; 68; 69, 70) oder das weitere Ventil, über welches selektiv eine Lufttrocknungskartusche (15; 16), die andere Lufttrocknungskartusche (16; 15) oder beide Lufttrocknungskartuschen (15, 16) mit dem Kompressor (2) und/oder mit dem Entlüftungsanschluss (6) verbindbar ist/sind, über mindestens ein Magnetventil (53; 55; 71, 72; 81) vorgesteuert Ist/sind.

6. Nutzfahrzeug-Druckluftaufbereitungseinrichtung (1) nach Anspruch 1 oder 2, **dadurch gekennzeichnet, dass** zwischen das mindestens eine Regenerationsventil (63; 63a, 63b) und die Ausgangsleitungen (89, 90) jeweils ein in Richtung der Lufttrocknungskartusche (15, 16) öffnendes Rückschlagventil (65a, 65b) zwischengeordnet ist.

7. Nutzfahrzeug-Druckluftaufbereitungseinrichtung (1) nach Anspruch 1, 2 oder 6, **dadurch gekennzeichnet, dass** das oder mindestens eine Regenerationsventil (63) über ein Magnetventil (53) pneumatisch vorgesteuert .

8. Nutzfahrzeug-Druckluftaufbereitungseinrichtung (1) nach Anspruch 7, **dadurch gekennzeichnet, dass** das Magnetventil (53), über welches das Regenerationsventil (63) pneumatisch vorgesteuert ist, auch zur Vorsteuerung mindestens eines steuerbaren Kreisschutzventils (26, 27) dient.

9. Nutzfahrzeug-Druckluftaufbereitungseinrichtung (1) nach Anspruch 1, 2, 6, 7 oder 8, **dadurch gekennzeichnet, dass** eine Drossel (14) in das Regenerationsventil (63) oder in eine mit dem Regenerationsventil (63) verbundene Leitung (62; 64) integriert ist.

10. Nutzfahrzeug-Druckluftaufbereitungseinrichtung (1) nach einem der vorhergehenden Ansprüche, **dadurch gekennzeichnet, dass** ein Magnetventil (52) vorgesehen ist, welches einen Steuerdruck für einen Druckregler (4) und/oder eine Regelung eines Kompressors (2) bereitstellt.

11. Nutzfahrzeug-Druckluftaufbereitungseinrichtung (1) nach einem der vorhergehenden Ansprüche, **dadurch gekennzeichnet, dass** ein Ventil (76) vorgesehen ist, welches einen Druckregler (4) in eine Entlüftungsstellung überführt, wenn beide Lufttrocknungskartuschen (15, 16) mit dem Entlüftungsanschluss (6) verbunden sind.

12. Nutzfahrzeug-Druckluftaufbereitungseinrichtung (1) nach Anspruch 1 oder 2, **dadurch gekennzeichnet, dass** die Steuerlogik eine erforderliche Regenerationsluftmenge und/oder Regenerationszeit für die jeweilige Lufttrocknungskartusche (15; 16) ermittelt oder approximiert und anschließend einen Regenerationsbetrieb dieser Lufttrocknungskartusche (15; 16) beendet, wenn die ermittelte oder approximierte Regenerationsluftmenge die Lufttrocknungskartusche durchströmt hat oder die ermittelte oder approximierte Regenerationszeit beendet ist.

13. Nutzfahrzeug-Druckluftaufbereitungseinrichtung (1) nach Anspruch 1, 2 oder 12, **dadurch gekennzeichnet, dass** die Steuereinheit (51) eine Steuerlogik aufweist, welche
a) zur Ermöglichung eines Betriebs, insbesondere eines Turbolader-Betriebs mit hohen Förderströmen, beide Lufttrocknungskartuschen (15, 16) für einen Versorgungsbetrieb mit einem Kompressor (2) und/oder
b) zur Ermöglichung einer gemeinsamen Regeneration beide Lufttrocknungskartuschen (15; 16) für einen Regenerationsbetrieb mit einem Entlüftungsanschluss (6)
verbindet.

## Claims

1. Pressurised air processing device (1) for a commercial vehicle with
a) a central line from which a plurality of consumers branches off, the pressure in the central line being protected by at least one check valve, and
b) two air dryer cartridges (15, 16) arranged in parallel line branches (11, 12),
c) wherein it is possible to control a regenerating operation of one air dryer cartridge (15; 16) independent on a supply operation of the other air dryer cartridge (16; 15),
d) outlet lines (89, 90) of the air dryer cartridges (15, 16) are connected to each other by a regeneration valve (63) or the central line (10) of the pressurised air processing device (1) for the commercial vehicle being secured by at least one check valve (9) is connected via at least one regeneration valve (63; 63a, 63b) to outlet lines (89, 90) of the air dryer cartridges (15, 16) and
e) an electronic control unit (51) comprising a control logic is provided via which a compressor (2) can be connected to one as well as to both air dryer cartridges (15, 16).

2. Pressurised air processing device (1) for a commercial vehicle, in particular a pressurised air processing device (1) for a commercial vehicle according to claim 1, with
a) a central line from which a plurality of consumers branches off, the pressure in the central line being protected by at least one check valve, and
b) two air dryer cartridges (15, 16) arranged in parallel line branches (11, 12),
c) wherein it is possible to control a regenerating operation of one air dryer cartridge (15; 16) independent on a supply operation of the other air dryer cartridge (16; 15),
d) outlet lines (89, 90) of the air dryer cartridges (15, 16) are connected to each other by a regeneration valve (63) or the central line (10) of the pressurised air processing device (1) for the commercial vehicle being secured by at least one check valve (9) is connected via at least one regeneration valve (63; 63a, 63b) to outlet lines (89, 90) of the air dryer cartridges (15, 16) and
e) an electronic control unit (51) comprising control logic is provided by which a regenerating operation of one air dryer cartridge (15; 16) can be initiated or terminated independent on the supply operation of the other air dryer cartridge (16; 15).

3. Pressurised air processing device (1) for a commercial vehicle of claims 1 or 2, **characterised in that** at least one valve (23; 24; 68; 69, 70) is arranged upstream from the air dryer cartridges (15, 16) by which it is possible to selectively connect one air dryer cartridge (15) or the other air dryer cartridge (16) to a compressor (2) and/or to a deaerating port (6).

4. Pressurised air processing device (1) for a commercial vehicle of claim 3, **characterised in that** it is possible to connect both air dryer cartridges (15, 16) at the same time to the compressor (2) and/or to the deaerating port (6) by the at least one valve (23; 24; 68; 69, 70) arranged upstream from the air dryer cartridges (15, 16) or by a further valve.

5. Pressurised air processing device (1) for a commercial vehicle of claims 3 or 4, **characterised in that** the at least one valve (23; 24; 68; 69, 70) or the further valve by which it is possible to selectively connect one air dryer cartridge (15; 16), the other air dryer cartridge (16; 15) or both air dryer cartridges (15, 16) to the compressor (2) and/or to the deaerating port (6) is/are pilot-controlled by at least one solenoid valve (53; 55; 71, 72; 81).

6. Pressurised air processing device (1) for a commercial vehicle of claims 1 or 2, **characterised in that** between the at least one regeneration valve (63; 63a, 63b) and the outlet lines (89, 90) each a check valve (65a, 65b) is interposed, said check valve (65a, 65b) opening towards the air dryer cartridge (15, 16).

7. Pressurised air processing device (1) for a commercial vehicle of claims 1, 2 or 6, **characterised in that** the or at least one regeneration valve (63) is pneumatically pilot-controlled by a solenoid valve (53).

8. Pressurised air processing device (1) for a commercial vehicle of claim 7, **characterised in that** the solenoid valve (53) by which the regeneration valve (63) is pneumatically pilot-controlled also serves for a pilot control of at least one controllable circuit protection valve (26, 27).

9. Pressurised air processing device (1) for a commercial vehicle of claim 1, 2, 6, 7 or 8, **characterised in that** a throttle (14) is integrated into the regeneration valve (63) or into a line (62; 64) connected to the regeneration valve (63).

10. Pressurised air processing device (1) for a commercial vehicle of one of the preceding claims, **characterised in that** a solenoid valve (52) is provided which provides a control pressure for a pressure controller (4) and/or a control of compressor (2).

11. Pressurised air processing device (1) for a commercial vehicle of one of the preceding claims, **characterised in that** a valve (76) is provided which transfers a pressure controller (4) into a deaerating state when both air dryer cartridges (15, 16) are connected to the deaerating port (6).

12. Pressurised air processing device (1) for a commercial vehicle of claims 1 or 2, **characterised in that** the control logic determines or approximates a required regeneration air volume and/or a regeneration time for the respective air dryer cartridge (15; 16) and subsequently terminates a regeneration operation of this air dryer cartridge (15; 16) when the determined or approximated regeneration air volume has streamed through the air dryer cartridge or when the determined or approximated regeneration time has lapsed.

13. Pressurised air processing device (1) for a commercial vehicle of claim 1, 2 or 12, **characterised in that** the control unit (51) comprises control logic which connects
a) both air dryer cartridges (15, 16) for a supply operation to a compressor (2) for the provision of an operation, in particular a turbo loading operation with increased supply flows, and/or
b) both air dryer cartridges (15; 16) for a regeneration operation to a deaerating port (6) for the provision of a common regeneration.

## Revendications

1. Dispositif de traitement d'air comprimé de véhicule utilitaire (1) avec
a) une canalisation centrale, à partir de laquelle bifurquent plusieurs consommateurs, la pression dans la canalisation centrale étant sécurisée par au moins un clapet anti-retour, et
b) deux cartouches de séchage d'air (15, 16) disposées dans des branches de canalisation parallèles (11, 12),
c) un mode de régénération d'une cartouche de séchage d'air (15 ; 16) pouvant être contrôlé indépendamment d'un mode d'alimentation de l'autre cartouche de séchage d'air (16 ; 15),
d) des canalisations de sortie (89, 90) des cartouches de séchage d'air (15, 16) étant reliées entre elles par l'intermédiaire d'une vanne de régénération (63), ou la canalisation centrale (10) du dispositif de traitement d'air comprimé de véhicule utilitaire (1), protégée par l'au moins un clapet anti-retour (9), étant reliée, par l'intermédiaire d'au moins une vanne de régénération (63 ; 63a, 63b), aux canalisations de sortie (89, 90) des cartouches de séchage d'air (15, 16), et
e) une unité de commande électronique (51) étant munie d'une logique de commande par l'intermédiaire de laquelle un compresseur (2) peut être relié aussi bien à une cartouche qu'aux deux cartouches de séchage d'air (15, 16).

2. Dispositif de traitement d'air comprimé de véhicule utilitaire (1), en particulier dispositif de traitement d'air comprimé de véhicule utilitaire (1) selon la revendication 1, avec
a) une canalisation centrale, à partir de laquelle bifurquent plusieurs consommateurs, la pression dans la canalisation centrale étant sécurisée par au moins un clapet anti-retour, et
b) deux cartouches de séchage d'air (15, 16) disposées dans des branches de canalisation parallèles (11, 12),
c) un mode de régénération d'une cartouche de séchage d'air (15 ; 16) pouvant être contrôlé indépendamment d'un mode d'alimentation de l'autre cartouche de séchage d'air (16 ; 15),
d) des canalisations de sortie (89, 90) des cartouches de séchage d'air (15, 16) étant reliées entre elles par l'intermédiaire d'une vanne de régénération (63) ou la canalisation centrale (10) du dispositif de traitement d'air comprimé de véhicule utilitaire (1), protégée par l'au moins un clapet anti-retour (9), étant reliée, par l'intermédiaire d'au moins une vanne de régénération (63 ; 63a, 63b), aux canalisations de sortie (89, 90) des cartouches de séchage d'air (15, 16), et
e) une unité de commande électronique (51) étant munie d'une logique de commande par l'intermédiaire de laquelle un mode de régénération d'une cartouche de séchage d'air (15; 16) est terminé ou démarré indépendamment du mode d'alimentation de l'autre cartouche de séchage d'air (16 ; 15).

3. Dispositif de traitement d'air comprimé de véhicule utilitaire (1) selon la revendication 1 ou 2,
**caractérisé en ce que**, en amont des cartouches de séchage d'air (15, 16), est disposée au moins une vanne (23 ; 24 ; 68 ; 69, 70), par l'intermédiaire de laquelle une cartouche de séchage d'air (15) ou l'autre cartouche de séchage d'air (16) peut être reliée de manière sélective au compresseur (2) et/ou au raccord de purge (6).

4. Dispositif de traitement d'air comprimé de véhicule utilitaire (1) selon la revendication 3, **caractérisé en ce que**, par l'intermédiaire de l'au moins une vanne (23 ; 24 ; 68 ; 69, 70), disposée en amont des cartouches de séchage d'air (15, 16), ou d'une autre vanne, les deux cartouches de séchage d'air (15, 16) peuvent être reliées simultanément au compresseur (2) et/ou au raccord de purge (6).

5. Dispositif de traitement d'air comprimé de véhicule utilitaire (1) selon la revendication 3 ou 4, **caractérisé en ce que** l'au moins une vanne (23 ; 24 ; 68 ; 69, 70) ou l'autre vanne, par l'intermédiaire de laquelle une cartouche de séchage d'air (15 ; 16), l'autre cartouche de séchage d'air (16 ; 15) ou les deux cartouches de séchage d'air (15, 16) peut/peuvent être reliée(s) sélectivement au compresseur (2) et/ou au raccord de purge (6), est/sont pilotée(s) par l'intermédiaire d'au moins une électrovanne (53 ; 55 ; 71, 72 ; 81).

6. Dispositif de traitement d'air comprimé de véhicule utilitaire (1) selon la revendication 1 ou 2, **caractérisé en ce que**, entre l'au moins une vanne de régénération (63 ; 63a, 63b) et les canalisations de sortie (89, 90), est intercalé un clapet anti-retour respectif (65a, 65b) s'ouvrant en direction de la cartouche de séchage d'air (15, 16).

7. Dispositif de traitement d'air comprimé de véhicule utilitaire (1) selon la revendication 1, 2 ou 6, **caractérisé en ce que** la ou l'au moins une vanne de régénération (63) est pilotée de manière pneumatique par l'intermédiaire d'une électrovanne (53).

8. Dispositif de traitement d'air comprimé de véhicule utilitaire (1) selon la revendication 7, **caractérisé en ce que** l'électrovanne (53), par l'intermédiaire de laquelle la vanne de régénération (63) est pilotée de manière pneumatique, permet également de piloter au moins une vanne de protection de circuit (26, 27) contrôlable.

9. Dispositif de traitement d'air comprimé de véhicule utilitaire (1) selon la revendication 1, 2, 6, 7 ou 8, **caractérisé en ce qu'**un étranglement (14) est intégré dans la vanne de régénération (63) ou dans une canalisation (62 ; 64) reliée à la vanne de régénération (63).

10. Dispositif de traitement d'air comprimé de véhicule utilitaire (1) selon l'une des revendications précédentes, **caractérisé en ce qu'**une électrovanne (52) est prévue, qui génère une pression de commande pour un régulateur de pression (4) et/ou une régulation d'un compresseur (2).

11. Dispositif de traitement d'air comprimé de véhicule utilitaire (1) selon l'une des revendications précédentes, **caractérisé en ce qu'**une vanne (76) est prévue, qui met un régulateur de pression (4) dans une position de purge lorsque les deux cartouches de séchage d'air (15, 16) sont reliées au raccord de purge (6).

12. Dispositif de traitement d'air comprimé de véhicule utilitaire (1) selon la revendication 1 ou 2, **caractérisé en ce que** la logique de commande détermine ou approxime une quantité d'air de régénération et/ou un temps de régénération nécessaire pour la cartouche de séchage d'air respective (15 ; 16), puis termine un mode de régénération de cette cartouche de séchage d'air (15 ; 16) lorsque la quantité d'air de régénération déterminée ou approximée a traversé la cartouche de séchage d'air ou lorsque le temps de régénération déterminé ou approximé s'est écoulé.

13. Dispositif de traitement d'air comprimé de véhicule utilitaire (1) selon la revendication 1, 2 ou 12, **caractérisé en ce que** l'unité de commande (51) comprend une logique de commande, qui
a) pour permettre un mode, plus particulièrement un mode turbocompresseur avec des flux élevés, relie les deux cartouches de séchage d'air (15, 16), pour un mode d'alimentation, à un compresseur (2) et/ou
b) pour permettre une régénération commune, relie les deux cartouches de séchage d'air (15 ; 16), pour un mode de régénération, à un raccord de purge (6).
